# EUROPEAN PATENT APPLICATION

(11) **EP 4 303 737 A1**
(43) Date of publication of application: **10.01.2024**
(21) Application number: 21932112.2
(22) Date of filing: 24.03.2021
(51) Int. Cl.: G06F 13/40

(54) **DATA TRANSMISSION APPARATUS AND DATA TRANSMISSION METHOD**

(71) Applicant: Huawei Technologies Co., Ltd., Shenzhen, Guangdong 518129 (CN)
(72) Inventor: LU, Deng, Shenzhen, Guangdong 518129 (CN); QIAN, Zhaohua, Shenzhen, Guangdong 518129 (CN); ZHANG, Weixing, Shenzhen, Guangdong 518129 (CN); KE, Jiandong, Shenzhen, Guangdong 518129 (CN)
(74) Representative: Pfenning, Meinig & Partner mbB
(86) International application number: PCT/CN2021/082638
(87) International publication number: WO 2022/198484

(57) **Abstract**

This application provides a data transmission apparatus and a data transmission method, to effectively use pin resources and avoid a waste of pin resources. The data transmission apparatus in this application includes: a first connection unit and a control unit, where the first connection unit is a connector plug or a connector socket; and the control unit is configured to: if determining that the first connection unit is in a forward insertion state, control a first data pin pair of the first connection unit to be in a first communication mode, and control a second data pin pair of the first connection unit to be in a second communication mode; or if determining that the first connection unit is in a reverse insertion state, control the first data pin pair to be in a second communication mode, and control the second data pin pair to be in the first communication mode. The first data pin pair and the second data pin pair are centrosymmetrically disposed in the first connection unit, and the first data pin pair or the second data pin pair is configured to transmit a valid signal in both the first communication mode and the second communication mode.

## Description

### TECHNICAL FIELD

This application relates to the field of communication technologies, and in particular, to a data transmission apparatus and a data transmission method.

### BACKGROUND

With continuous emergence of data transmission apparatuses such as smart phones and tablet computers, a universal serial bus (universal serial bus, USB) connector is widely used because of its advantages such as a high transmission speed, support for hot swap, and independent power supply, and becomes a common choice for data transmission in various apparatuses.

The USB connector may include two connection units in pairs, for example, a connector socket and a connector plug. The following uses a USB Type-C connector as an example for description. The connector socket has two data pin pairs, that is, a D+ pin/a D- pin at positions A6/A7 and a D+ pin/a D- pin at positions B6/B7. The connector plug has a data pin pair, that is, a D+ pin/a D- pin at positions A6/A7. When the plug is inserted into the socket along a forward insertion direction, the pins at the positions A6/A7 on the plug are connected to the pins at the positions A6/A7 on the socket. When the plug is inserted into the socket along a reverse insertion direction, the pins at the positions A6/A7 on the plug are connected to the pins at the positions B6B7 on the socket, so that the connected pins complete data transmission.

It can be learned that, because the socket has two data pin pairs, regardless of whether the plug is in the forward insertion state or the reverse insertion state, only one data pin pair of the socket is used, and the other data pin pair is always redundant, which causes a waste of pin resources.

### SUMMARY

Embodiments of this application provide a data transmission apparatus and a data transmission method, to effectively use pin resources and avoid a waste of pin resources.

A first aspect of the embodiments of this application provides a data transmission apparatus. The apparatus may be connected to another data transmission apparatus by using a connection component. The apparatus includes a first connection unit and a control unit. The first connection unit and a second connection unit on the connection component may form a complete USB connector (for example, a USB Type-C connector), that is, a connector plug and a connector socket in pairs. For example, the first connection unit is a connector plug, and the second connection unit is a connector socket. For another example, the first connector is a connector socket, and the second connection unit is a connector socket.

The first connection unit has a first data pin pair and a second data pin pair, and the first data pin pair and the second data pin pair are centrosymmetrically disposed in the first connection unit. For example, the first data pin pair may be pins at positions A6/A7. The pin pair is defined as a D0+ pin/a D0- pin, and "D0" corresponds to a first communication mode. The second data pin pair may be pins at positions B6/B7. The pin pair is defined as a D1+ pin/a D1-pin, and "D1" corresponds to a second communication mode.

The control unit is configured to: if determining that the first connection unit is in a forward insertion state, control a first data pin pair of the first connection unit to be in a first communication mode, and control a second data pin pair of the first connection unit to be in a second communication mode; or if determining that the first connection unit is in a reverse insertion state, control the first data pin pair to be in the second communication mode, and control the second data pin pair to be in the first communication mode. The first data pin pair or the second data pin pair is configured to transmit a valid signal in both the first communication mode and the second communication mode.

Still as in the foregoing example, it is assumed that the first communication mode is a mode complying with a USB protocol, and the second communication mode is a mode complying with a fast charging protocol. When the first connection unit is in a forward insertion state, the control unit may set the pins at the positions A6/A7 as a D0+ pin/a D0- pin, and set the pins at the positions B6/B7 as a D1+ pin/a D1- pin, and the two data pin pairs respectively implement USB data transmission and a fast charging function. When the first connection unit is in a reverse insertion state, the control unit may set the pins at the positions A6/A7 as a D1+ pin/a D1- pin, and set the pins at the positions B6/B7 as a D0+ pin/a D0- pin, and the two data pin pairs respectively implement a fast charging function and USB data transmission.

It can be learned from the foregoing apparatus that, regardless of whether the first connection unit is in the forward insertion state or the reverse insertion state, the two data pin pairs of the first connection unit may simultaneously work in different communication modes to transmit valid signals, that is, both the two data pin pairs of the first connection unit are used, to effectively utilize pin resources and avoid a waste of pin resources.

In a possible implementation, the first data pin pair is configured to transmit, in the first communication mode, a first differential signal complying with a universal serial bus USB protocol; and the first data pin pair is configured to transmit, in the second communication mode, a second differential signal complying with the USB protocol. In the foregoing implementation, the first data pin pair and the second data pin pair may be configured to transmit USB data of different service content.

In a possible implementation, the first data pin pair is configured to transmit, in the first communication mode, a differential signal complying with a USB protocol; and the first data pin pair is configured to transmit, in the second communication mode, a differential signal complying with another communication protocol different from the USB protocol. In the foregoing implementation, the first data pin pair may be configured to transmit USB data, and the second data pin pair may implement another purpose, for example, fast charging or video transmission.

In a possible implementation, the first data pin pair is configured to transmit, in the first communication mode, a differential signal complying with a USB protocol; and the first data pin pair is configured to transmit, in the second communication mode, single-ended signals of a same type. In the foregoing implementation, the first data pin pair may be configured to transmit USB data, and the second data pin pair may implement another purpose, for example, transmitting a general purpose input/output (general purpose input/output, GPIO) signal or an inter-integrated circuit (inter-integrated circuit, I2C) signal.

In a possible implementation, the first data pin pair is configured to transmit, in the first communication mode, a differential signal complying with a USB protocol; and the first data pin pair is configured to transmit, in the second communication mode, single-ended signals of different types. In the foregoing implementation, the first data pin pair may be configured to transmit USB data, and the second data pin pair may implement another purpose, for example, transmit a GPIO signal and an I2C signal together.

In a possible implementation, the differential signal complying with another communication protocol different from the USB protocol includes a differential signal complying with a fast charging protocol or a differential signal complying with a video transmission protocol.

In a possible implementation, the single-ended signal is a general purpose input/output GPIO signal or an inter-integrated circuit I2C signal.

In a possible implementation, the apparatus further includes: a first transceiver configured to implement the first communication mode and a second transceiver configured to implement the second communication mode; and the control unit is specifically configured to: if determining that the first connection unit is in the forward insertion state, connect a first end of the first transceiver to the first data pin pair; or if determining that the first connection unit is in the reverse insertion state, connect a first end of the second transceiver to the first data pin pair. Likewise, this also applies to the second data pin pair, and details are not described herein again. In the foregoing implementation, the control unit connects the first data pin pair to different transceivers based on an insertion state of the first connection unit. When the first connection unit is in the forward insertion state, the first data pin pair may be enabled to implement the first communication mode, and the second data pin pair may be enabled to implement the second communication mode. When the first connection unit is in the reverse insertion state, the first data pin pair may be enabled to implement the second communication mode, and the second data pin pair may be enabled to implement the first communication mode. In this way, when the first connection unit is in the reverse insertion state, the control unit exchanges roles of the first data pin pair and the second data pin pair, to ensure that the first connection unit and the second connection unit can work normally.

In a possible implementation, the apparatus further includes a first controller configured to implement the first communication mode and a second controller configured to implement the second communication mode. The control unit is further configured to: if determining that the first connection unit is in the forward insertion state, connect a second end of the first transceiver to the first controller; or if determining that the first connection unit is in the reverse insertion state, connect a second end of the second transceiver to the second controller. Likewise, this also applies to a third transceiver and a fourth transceiver, and details are not described herein again. In the foregoing implementation, a controller and a transceiver that are configured to implement a same communication mode can always keep a connection, to ensure data transmission between data transmission apparatuses.

In a possible implementation, the control unit is specifically configured to obtain a status signal from a detection pin of the first connection unit, and determine, based on the status signal, that the first connection unit is in the forward insertion state or the reverse insertion state. In the foregoing implementation, after receiving the status signal, the control unit may determine whether the first connection unit is currently in the forward insertion state or the reverse insertion state, and perform a corresponding control operation on the transceiver.

In a possible implementation, if the second transceiver and the fourth transceiver are fast charging transceivers, the control unit is specifically configured to obtain a status signal from the fast charging transceiver, and determine, based on the status signal, that the first connection unit is in the forward insertion state or the reverse insertion state. In the foregoing implementation, after receiving the status signal, the control unit may determine whether the first connection unit is currently in the forward insertion state or the reverse insertion state, and perform a corresponding control operation on the transceiver.

In a possible implementation, the control unit is further configured to: if determining that the first connection unit is in a connected state, control the first transceiver and the second transceiver to be in a disconnected state before determining that the first connection unit is in the forward insertion state or the reverse insertion state. In the foregoing implementation, when the control unit has not determined whether the first connection unit is in the forward insertion state or the reverse insertion state, even if the first connection unit is already connected to the second connection unit and is in the reverse insertion state (which has not been determined by the control unit), the control unit can effectively prevent incorrect data from being transmitted between a first data transmission apparatus and a second data transmission apparatus by enabling the first transceiver and the second transceiver to be in a disconnected state.

A second aspect of the embodiments of this application provides a data transmission apparatus, where the apparatus includes a first connection unit, where the first connection unit is a connector plug or a connector socket, the first connection unit includes a first data pin, a second data pin, a third data pin, and a fourth data pin, the first data pin and the second data pin are centrosymmetrically disposed in the first connection unit, and the third data pin and the fourth data pin are centrosymmetrically disposed in the first connection unit.

The first data pin is configured to transmit a first signal, and the second data pin is configured to transmit a second signal; or the first data pin is configured to transmit the second signal, and the second data pin is configured to transmit the first signal, where the first signal and the second signal are signals in pairs. For example, the first data pin is a pin at a position A7, and the second data pin is a pin at a position B7. When the first connection unit is in a forward insertion state, the pins at the positions A7/B7 is set as a D+ pin/a D- pin, and are respectively configured to transmit the first signal and the second signal, to implement a first communication mode. When the first connection unit is in a reverse insertion state, the pins at the positions A7B7 are set as a D- pin/a D+ pin, and are respectively configured to transmit the second signal and the first signal, to implement the first communication mode.

The third data pin is configured to transmit a third signal, and the fourth data pin is configured to transmit a fourth signal; or the third data pin is configured to transmit the fourth signal, and the fourth data pin is configured to transmit the third signal, where the third signal and the fourth signal are signals in pairs. For example, the third data pin is a pin at a position B6, and the fourth data pin is a pin at a position A6. When the first connection unit is in the forward insertion state, the pins at the positions B6/A6 are set as an X+ pin/an X- pin, and are respectively configured to transmit the third signal and the fourth signal, to implement a second communication mode. When the first connection unit is in the reverse insertion state, the pins at the positions B6/A6 are set as an X- pin/an X+ pin, and are respectively configured to transmit the fourth signal and the third signal, to implement the second communication mode.

In a related technology, a D+ pin/a D- pin of the first connection unit are usually disposed on a same side, that is, pins at positions A6A7, and the pins at the positions A6A7 are either suspended or are also disposed as a D+ pin/a D- pin, thereby causing a waste of pin resources. However, in the apparatus provided in this embodiment of this application, the D+ pin/the D- pin of the first connection unit are disposed on two opposite sides, and are centrosymmetrically disposed, that is, pins at positions A7/B7. Similarly, an X+ pin/an X- pin of the first connection unit are also disposed on two opposite sides, and are centrosymmetrically disposed, that is, the pins at the positions B6/A6. It can be learned that, the four data pins of the first connection unit are divided into two pairs, and two data pins in each pair of data pins are centrosymmetrically disposed. Regardless of whether the first connection unit is in the forward insertion state or the reverse insertion state, the two data pin pairs are both used, thereby effectively using pin resources and avoiding a waste of pin resources.

In a possible implementation, the first signal and the second signal are first differential signals complying with a USB protocol, and the third signal and the fourth signal are second differential signals complying with the USB protocol.

In a possible implementation, the first signal and the second signal are differential signals complying with a USB protocol, and the third signal and the fourth signal are differential signals complying with another communication protocol different from the USB protocol.

In a possible implementation, the first signal and the second signal are differential signals complying with a USB protocol, and the third signal and the fourth signal are single-ended signals of a same type.

In a possible implementation, the first signal and the second signal are differential signals complying with a USB protocol, and the third signal and the fourth signal are single-ended signals of different types.

In a possible implementation, the differential signal complying with another communication protocol different from the USB protocol includes a differential signal complying with a fast charging protocol or a differential signal complying with a video transmission protocol.

In a possible implementation, the single-ended signal is a general purpose input/output GPIO signal or an inter-integrated circuit I2C signal.

In a possible implementation, the apparatus further includes a control unit, a first transceiver, and a second transceiver. A first end of the first transceiver is connected to the first data pin, a second end of the first transceiver is connected to the second data pin, a first end of the second transceiver is connected to the third data pin, and a second end of the second transceiver is connected to the fourth data pin. The control unit is configured to: if determining that the first connection unit is in the reverse insertion state, negate a first signal transmitted by the first end of the first transceiver, so that the first end of the first transceiver transmits the second signal with the first data pin; negate a second signal transmitted by the second end of the first transceiver, so that the second end of the first transceiver transmits the first signal with the second data pin; negate a third signal transmitted by the first end of the second transceiver, so that the first end of the second transceiver transmits the fourth signal with the third data pin; and negate a fourth signal transmitted by the second end of the second transceiver, so that the second end of the second transceiver transmits the third signal with the fourth data pin. In the foregoing implementation, when the first connection unit is in the reverse insertion state, the control unit negates signals transmitted on the first end of the first transceiver, the second end of the first transceiver, the first end of the second transceiver, and the second end of the second transceiver, so that roles of the first data pin and the second data pin are exchanged, and roles of the third data pin and the fourth data pin are exchanged, thereby ensuring normal working of the first connection unit and the second connection unit.

In a possible implementation, the first transceiver includes a first pull-up resistor and a second pull-up resistor, where a first end of the first pull-up resistor is connected to the first end of the first transceiver, and a first end of the second pull-up resistor is connected to the second end of the first transceiver; the control unit is further configured to: if determining that the first connection unit is in a forward insertion state, connect a second end of the first pull-up resistor to a first power supply, and disconnect a second end of the second pull-up resistor from a second power supply; or if determining that the first connection unit is in the reverse insertion state, disconnect the second end of the first pull-up resistor from the first power supply, and connect the second end of the second pull-up resistor to the second power supply. In the foregoing implementation, the first pull-up resistor is disposed at the first end of the first transceiver, and the second pull-up resistor is disposed at the second end of the second transceiver. In this way, when the first connection unit is in the forward insertion state, the first pull-up resistor may be connected to the first end of the first transceiver, and when the first connection unit is in the reverse insertion state, the second pull-up resistor may be connected to the second end of the first transceiver, so that the first transceiver can always implement data transmission modes at various rates without being affected by an insertion state of the first connection unit.

In a possible implementation, the apparatus further includes a control unit, a first transceiver, and a second transceiver; the control unit is configured to: if determining that the first connection unit is in a forward insertion state, perform the following operations: connecting a first end of the first transceiver to the first data pin, so that the first end of the first transceiver transmits the first signal with the first data pin; connecting a second end of the first transceiver to the second data pin, so that the second end of the first transceiver transmits the second signal with the second data pin; connecting a first end of the second transceiver to the third data pin, so that the first end of the second transceiver transmits the third signal with the third data pin; and connecting a second end of the second transceiver to the fourth data pin, so that the second end of the second transceiver transmits the fourth signal with the fourth data pin; or if determining that the first connection unit is in a reverse insertion state, perform the following operations: connecting a first end of the first transceiver to the second data pin, so that the first end of the first transceiver transmits the second signal with the second data pin; connecting a second end of the first transceiver to the first data pin, so that the second end of the first transceiver transmits the first signal with the first data pin; connecting a first end of the second transceiver to the fourth data pin, so that the first end of the second transceiver transmits the fourth signal with the fourth data pin; and connecting the second end of the second transceiver to the third data pin, so that the second end of the second transceiver transmits the third signal with the third data pin. In the foregoing implementation, the control unit changes a physical connection relationship between the transceiver and the data pin, so that roles of the first data pin and the second data pin are exchanged, and roles of the third data pin and the fourth data pin are exchanged, thereby ensuring normal working of the first connection unit and the second connection unit.

In a possible implementation, the control unit is specifically configured to obtain a status signal from a detection pin of the first connection unit, and determine, based on the status signal, that the first connection unit is in the forward insertion state or the reverse insertion state.

In a possible implementation, the control unit is further configured to: if determining that the first connection unit is in a connected state, control the first transceiver and the second transceiver to be in a disconnected state before determining that the first connection unit is in the forward insertion state or the reverse insertion state.

A third aspect of the embodiments of this application provides a connection component, where the connection component is connected between a first data transmission apparatus and a second data transmission apparatus, and the connection component includes: a second connection unit, a third connection unit, and a control unit, where the second connection unit is coupled to the first data transmission apparatus, the third connection unit is coupled to the second data transmission apparatus, the second connection unit is a connector plug or a connector socket, the third connection unit is a connector plug or a connector socket, and the second connection unit and the third connection unit are configured to transmit a first signal and a second signal in pairs, and a third signal and a fourth signal in pairs; and
the control unit is configured to: if determining that the second connection unit is in a forward insertion state, perform the following operations: connecting a fifth data pin of the second connection unit to a ninth data pin of the third connection unit, to transmit the first signal between the first data transmission apparatus and the second data transmission apparatus by using the fifth data pin and the ninth data pin; connecting a sixth data pin of the second connection unit to a tenth data pin of the third connection unit, to transmit the second signal between the first data transmission apparatus and the second data transmission apparatus by using the sixth data pin and the tenth data pin; connecting a seventh data pin of the second connection unit to an eleventh data pin of the third connection unit, to transmit the third signal between the first data transmission apparatus and the second data transmission apparatus by using the seventh data pin and the eleventh data pin; and connecting an eighth data pin of the second connection unit to a twelfth data pin of the third connection unit, to transmit the fourth signal between the first data transmission apparatus and the second data transmission apparatus by using the fifth data pin and the twelfth data pin; or
if determining that the second connection unit is in a reverse insertion state, perform the following operations: connecting the fifth data pin to the tenth data pin, to transmit the second signal between the first data transmission apparatus and the second data transmission apparatus by using the fifth data pin and the tenth data pin; connecting the sixth data pin to the ninth data pin, to transmit the first signal between the first data transmission apparatus and the second data transmission apparatus by using the sixth data pin and the ninth data pin; connecting the seventh data pin to the twelfth data pin, to transmit the fourth signal between the first data transmission apparatus and the second data transmission apparatus by using the seventh data pin and the twelfth data pin; and connecting the eighth data pin to the eleventh data pin, to transmit the third signal between the first data transmission apparatus and the second data transmission apparatus by using the eighth data pin and the eleventh data pin;
where the fifth data pin and the sixth data pin are centrosymmetrically disposed in the second connection unit, the seventh data pin and the eighth data pin are centrosymmetrically disposed in the second connection unit, the ninth data pin and the tenth pin are centrosymmetrically disposed in the third connection unit, and the eleventh data pin and the twelfth pin are centrosymmetrically disposed in the third connection unit.

It can be learned from the connection component that the control unit controls, based on an insertion state of the second connection unit, a connection relationship between two data pin pairs of the second connection unit and two data pin pairs of the third connection unit, so that the two pin pairs of both the second connection unit and the third connection unit can work normally, thereby implementing a first communication mode and a second communication mode. It can be learned that, regardless of whether the second connection unit is in the forward insertion state or the reverse insertion state, the two data pin pairs of the second connection unit of the connection component are used, thereby effectively using pin resources and avoiding a waste of pin resources.

In a possible implementation, the first signal and the second signal are first differential signals complying with a USB protocol, and the third signal and the fourth signal are second differential signals complying with the USB protocol.

In a possible implementation, the first signal and the second signal are differential signals complying with a USB protocol, and the third signal and the fourth signal are differential signals complying with another communication protocol different from the USB protocol.

In a possible implementation, the first signal and the second signal are differential signals complying with a USB protocol, and the third signal and the fourth signal are single-ended signals of a same type.

In a possible implementation, the first signal and the second signal are differential signals complying with a USB protocol, and the third signal and the fourth signal are single-ended signals of different types.

In a possible implementation, the differential signal complying with another communication protocol different from the USB protocol includes a differential signal complying with a fast charging protocol or a differential signal complying with a video transmission protocol.

In a possible implementation, the single-ended signal is a general purpose input/output GPIO signal or an inter-integrated circuit I2C signal.

In a possible implementation, the control unit is specifically configured to obtain a status signal from a detection pin of the second connection unit, and determine, based on the status signal, that the second connection unit is in the forward insertion state or the reverse insertion state.

In a possible implementation, the control unit is further configured to: if determining that the second connection unit is in a connected state, disconnect the second connection unit from the third connection unit before determining that the second connection unit is in the forward insertion state or the reverse insertion state.

A fourth aspect of the embodiments of this application provides a data transmission method, where the method is implemented by using a data transmission apparatus, the apparatus includes a first connection unit and a control unit, the first connection unit is a connector plug or a connector socket, and the method includes:
if determining that the first connection unit is in a forward insertion state, the control unit controls a first data pin pair of the first connection unit to be in a first communication mode, and controls a second data pin pair of the first connection unit to be in a second communication mode; or if determining that the first connection unit is in a reverse insertion state, controls the first data pin pair to be in the second communication mode, and controls the second data pin pair to be in the first communication mode; where the first data pin pair and the second data pin pair are centrosymmetrically disposed in the first connection unit, and the first data pin pair or the second data pin pair is configured to transmit a valid signal in both the first communication mode and the second communication mode.

In a possible implementation, the first data pin pair is configured to transmit, in the first communication mode, a first differential signal complying with a universal serial bus USB protocol; and the first data pin pair is configured to transmit, in the second communication mode, a second differential signal complying with the USB protocol.

In a possible implementation, the first data pin pair is configured to transmit, in the first communication mode, a differential signal complying with a USB protocol; and the first data pin pair is configured to transmit, in the second communication mode, a differential signal complying with another communication protocol different from the USB protocol.

In a possible implementation, the first data pin pair is configured to transmit, in the first communication mode, a differential signal complying with a USB protocol; and the first data pin pair is configured to transmit, in the second communication mode, single-ended signals of a same type.

In a possible implementation, the first data pin pair is configured to transmit, in the first communication mode, a differential signal complying with a USB protocol; and the first data pin pair is configured to transmit, in the second communication mode, single-ended signals of different types.

In a possible implementation, the differential signal complying with another communication protocol different from the USB protocol includes a differential signal complying with a fast charging protocol or a differential signal complying with a video transmission protocol.

In a possible implementation, the single-ended signal is a general purpose input/output GPIO signal or an inter-integrated circuit I2C signal.

In a possible implementation, the apparatus further includes a first transceiver configured to implement the first communication mode and a second transceiver configured to implement the second communication mode; and that if determining that the first connection unit is in a forward insertion state, the control unit controls a first data pin pair of the first connection unit to be in a first communication mode, and controls a second data pin pair of the first connection unit to be in a second communication mode; or if determining that the first connection unit is in a reverse insertion state, controls the first data pin pair to be in the second communication mode, and controls the second data pin pair to be in the first communication mode includes: if determining that the first connection unit is in the forward insertion state, the control unit connects a first end of the first transceiver to the first data pin pair; or if determining that the first connection unit is in the reverse insertion state, connects a first end of the second transceiver to the first data pin pair.

In a possible implementation, the apparatus further includes a first controller configured to implement the first communication mode and a second controller configured to implement the second communication mode. The method further includes: if determining that the first connection unit is in the forward insertion state, the control unit connects a second end of the first transceiver to the first controller; or if determining that the first connection unit is in the reverse insertion state, connects a second end of the second transceiver to the second controller.

In a possible implementation, that the control unit determines that the first connection unit is in the forward insertion state or the reverse insertion state includes: the control unit obtains a status signal from a detection pin of the first connection unit, and determines, based on the status signal, that the first connection unit is in the forward insertion state or the reverse insertion state.

In a possible implementation, if the second transceiver and the fourth transceiver are fast charging transceivers, that the control unit determines that the first connection unit is in the forward insertion state or the reverse insertion state includes: the control unit obtains a status signal from the fast charging transceiver, and determines, based on the status signal, that the first connection unit is in the forward insertion state or the reverse insertion state.

In a possible implementation, the method further includes: if determining that the first connection unit is in a connected state, the control unit controls the first transceiver and the second transceiver to be in a disconnected state before determining that the first connection unit is in the forward insertion state or the reverse insertion state.

A fifth aspect of the embodiments of this application provides a data transmission method, where the method is implemented by using a data transmission apparatus, and the apparatus includes a first connection unit, where the first connection unit is a connector plug or a connector socket, the first connection unit includes a first data pin, a second data pin, a third data pin, and a fourth data pin, the first data pin and the second data pin are centrosymmetrically disposed in the first connection unit, and the third data pin and the fourth data pin are centrosymmetrically disposed in the first connection unit; and the method includes:
the first connection unit transmits a first signal by using the first data pin, and transmits a second signal by using the second data pin, where the first signal and the second signal are signals in pairs; and the first connection unit transmits a third signal by using the third data pin, and transmits a fourth signal by using the fourth data pin, where the third signal and the fourth signal are signals in pairs; or the first connection unit transmits the second signal by using the first data pin, and transmits the first signal by using the second data pin; and the first connection unit transmits the fourth signal by using the third data pin, and transmits the third signal by using the fourth data pin.

In a possible implementation, the first signal and the second signal are first differential signals complying with a USB protocol, and the third signal and the fourth signal are second differential signals complying with the USB protocol.

In a possible implementation, the first signal and the second signal are differential signals complying with a USB protocol, and the third signal and the fourth signal are differential signals complying with another communication protocol different from the USB protocol.

In a possible implementation, the first signal and the second signal are differential signals complying with a USB protocol, and the third signal and the fourth signal are single-ended signals of a same type.

In a possible implementation, the first signal and the second signal are differential signals complying with a USB protocol, and the third signal and the fourth signal are single-ended signals of different types.

In a possible implementation, the differential signal complying with another communication protocol different from the USB protocol includes a differential signal complying with a fast charging protocol or a differential signal complying with a video transmission protocol.

In a possible implementation, the single-ended signal is a general purpose input/output GPIO signal or an inter-integrated circuit I2C signal.

In a possible implementation, the apparatus further includes a control unit, a first transceiver, and a second transceiver. A first end of the first transceiver is connected to the first data pin, a second end of the first transceiver is connected to the second data pin, a first end of the second transceiver is connected to the third data pin, and a second end of the second transceiver is connected to the fourth data pin. The method further includes: if determining that the first connection unit is in the reverse insertion state, the control unit negates a first signal transmitted by the first end of the first transceiver, so that the first end of the first transceiver transmits the second signal with the first data pin; negates a second signal transmitted by the second end of the first transceiver, so that the second end of the first transceiver transmits the first signal with the second data pin; negates a third signal transmitted by the first end of the second transceiver, so that the first end of the second transceiver transmits the fourth signal with the third data pin; and negates a fourth signal transmitted by the second end of the second transceiver, so that the second end of the second transceiver transmits the third signal with the fourth data pin.

In a possible implementation, the first transceiver includes a first pull-up resistor and a second pull-up resistor, where a first end of the first pull-up resistor is connected to the first end of the first transceiver, and a first end of the second pull-up resistor is connected to the second end of the first transceiver; and the method further includes: if determining that the first connection unit is in a forward insertion state, the control unit connects a second end of the first pull-up resistor to a first power supply, and disconnects a second end of the second pull-up resistor from a second power supply; or if determining that the first connection unit is in the reverse insertion state, disconnects the second end of the first pull-up resistor from the first power supply, and connects the second end of the second pull-up resistor to the second power supply.

In a possible implementation, the apparatus further includes a control unit, a first transceiver, and a second transceiver. The method further includes: if determining that the first connection unit is in a forward insertion state, the control unit performs the following operations: connecting a first end of the first transceiver to the first data pin, so that the first end of the first transceiver transmits the first signal with the first data pin; connecting a second end of the first transceiver to the second data pin, so that the second end of the first transceiver transmits the second signal with the second data pin; connecting a first end of the second transceiver to the third data pin, so that the first end of the second transceiver transmits the third signal with the third data pin; and connecting a second end of the second transceiver to the fourth data pin, so that the second end of the second transceiver transmits the fourth signal with the fourth data pin; or if determining that the first connection unit is in a reverse insertion state, performs the following operations: connecting a first end of the first transceiver to the second data pin, so that the first end of the first transceiver transmits the second signal with the second data pin; connecting a second end of the first transceiver to the first data pin, so that the second end of the first transceiver transmits the first signal with the first data pin; connecting a first end of the second transceiver to the fourth data pin, so that the first end of the second transceiver transmits the fourth signal with the fourth data pin; and connecting the second end of the second transceiver to the third data pin, so that the second end of the second transceiver transmits the third signal with the third data pin.

In a possible implementation, that the control unit determines that the first connection unit is in the forward insertion state or the reverse insertion state includes: the control unit obtains a status signal from a detection pin of the first connection unit, and determines, based on the status signal, that the first connection unit is in the forward insertion state or the reverse insertion state.

In a possible implementation, the method further includes: if determining that the first connection unit is in a connected state, the control unit controls the first transceiver and the second transceiver to be in a disconnected state before determining that the first connection unit is in the forward insertion state or the reverse insertion state.

A sixth aspect of the embodiments of this application provides a data transmission method, where the method is implemented by using a connection component, the connection part is connected between a first data transmission apparatus and a second data transmission apparatus, and the connection component includes a second connection unit, a third connection unit, and a control unit, where the second connection unit is coupled to the first data transmission apparatus, the third connection unit is coupled to the second data transmission apparatus, the second connection unit is a connector plug or a connector socket, the third connection unit is a connector plug or a connector socket, and the second connection unit and the third connection unit are configured to transmit a first signal and a second signal in pairs, and a third signal and a fourth signal in pairs; and the method includes:
if determining that the second connection unit is in a forward insertion state, the control unit performs the following operations: connecting a fifth data pin of the second connection unit to a ninth data pin of the third connection unit, to transmit the first signal between the first data transmission apparatus and the second data transmission apparatus by using the fifth data pin and the ninth data pin; connecting a sixth data pin of the second connection unit to a tenth data pin of the third connection unit, to transmit the second signal between the first data transmission apparatus and the second data transmission apparatus by using the sixth data pin and the tenth data pin; connecting a seventh data pin of the second connection unit to an eleventh data pin of the third connection unit, to transmit the third signal between the first data transmission apparatus and the second data transmission apparatus by using the seventh data pin and the eleventh data pin; and connecting an eighth data pin of the second connection unit to a twelfth data pin of the third connection unit, to transmit the fourth signal between the first data transmission apparatus and the second data transmission apparatus by using the fifth data pin and the twelfth data pin; or
if determining that the second connection unit is in a reverse insertion state, performs the following operations: connecting the fifth data pin to the tenth data pin, to transmit the second signal between the first data transmission apparatus and the second data transmission apparatus by using the fifth data pin and the tenth data pin; connecting the sixth data pin to the ninth data pin, to transmit the first signal between the first data transmission apparatus and the second data transmission apparatus by using the sixth data pin and the ninth data pin; connecting the seventh data pin to the twelfth data pin, to transmit the fourth signal between the first data transmission apparatus and the second data transmission apparatus by using the seventh data pin and the twelfth data pin; and connecting the eighth data pin to the eleventh data pin, to transmit the third signal between the first data transmission apparatus and the second data transmission apparatus by using the eighth data pin and the eleventh data pin; where the fifth data pin and the sixth data pin are centrosymmetrically disposed in the second connection unit, the seventh data pin and the eighth data pin are centrosymmetrically disposed in the second connection unit, the ninth data pin and the tenth pin are centrosymmetrically disposed in the third connection unit, and the eleventh data pin and the twelfth pin are centrosymmetrically disposed in the third connection unit.

In a possible implementation, the first signal and the second signal are first differential signals complying with a USB protocol, and the third signal and the fourth signal are second differential signals complying with the USB protocol.

In a possible implementation, the first signal and the second signal are differential signals complying with a USB protocol, and the third signal and the fourth signal are differential signals complying with another communication protocol different from the USB protocol.

In a possible implementation, the first signal and the second signal are differential signals complying with a USB protocol, and the third signal and the fourth signal are single-ended signals of a same type.

In a possible implementation, the first signal and the second signal are differential signals complying with a USB protocol, and the third signal and the fourth signal are single-ended signals of different types.

In a possible implementation, the differential signal complying with another communication protocol different from the USB protocol includes a differential signal complying with a fast charging protocol or a differential signal complying with a video transmission protocol.

In a possible implementation, the single-ended signal is a general purpose input/output GPIO signal or an inter-integrated circuit I2C signal.

In a possible implementation, that the control unit determines that the second connection unit is in the forward insertion state or the reverse insertion state includes: the control unit obtains a status signal from a detection pin of the second connection unit, and determines, based on the status signal, that the second connection unit is in the forward insertion state or the reverse insertion state.

In a possible implementation, the method further includes: if determining that the second connection unit is in a connected state, the control unit disconnects the second connection unit from the third connection unit before determining that the second connection unit is in the forward insertion state or the reverse insertion state.

In this embodiment of this application, the data transmission apparatus includes a first connection unit and a control unit, where the first connection unit is a connector plug or a connector socket. When determining that the first connection unit is in the forward insertion state, the control unit controls the first data pin pair of the first connection unit to be in the first communication mode, and controls the second data pin pair of the first connection unit to be in the second communication mode; or when determining that the first connection unit is in the reverse insertion state, controls the first data pin pair to be in the second communication mode, and controls the second data pin pair to be in the first communication mode, where the first data pin pair and the second data pin pair are centrosymmetrically disposed in the first connection unit, and the first data pin pair or the second data pin pair is configured to transmit a valid signal in both the first communication mode and the second communication mode. In the foregoing apparatus, regardless of whether the first connection unit is in the forward insertion state or the reverse insertion state, the two data pin pairs of the first connection unit may simultaneously work in different communication modes to transmit valid signals, that is, both the two data pin pairs of the first connection unit are used, to effectively utilize pin resources and avoid a waste of pin resources.

### BRIEF DESCRIPTION OF DRAWINGS

FIG. 1 is a schematic diagram of a structure of a data transmission system in a related technology;
FIG. 2(a) is a schematic diagram of a pin of a first connection unit of a first data transmission apparatus according to an embodiment of this application;
FIG. 2(b) is a schematic diagram of a pin of a second connection unit of a connection component according to an embodiment of this application;
FIG. 3 is a schematic diagram of a structure of a data transmission system according to an embodiment of this application;
FIG. 4(a) is a schematic diagram of a transceiver according to an embodiment of this application;
FIG. 4(b) is a schematic diagram of a transceiver according to an embodiment of this application;
FIG. 5(a) is a schematic diagram of another pin of a first connection unit of a first data transmission apparatus according to an embodiment of this application;
FIG. 5(b) is a schematic diagram of another pin of a second connection unit of a connection component according to an embodiment of this application;
FIG. 6 is another schematic diagram of a structure of a data transmission system according to an embodiment of this application;
FIG. 7(a) is another schematic diagram of a transceiver according to an embodiment of this application;
FIG. 7(b) is another schematic diagram of a transceiver according to an embodiment of this application;
FIG. 8 is a schematic diagram of a USB transceiver according to an embodiment of this application;
FIG. 9 is a schematic diagram of a structure of a negation unit 1 according to an embodiment of this application;
FIG. 10 is a schematic diagram of a structure of a negation unit 2 according to an embodiment of this application;
FIG. 11 is a schematic diagram of a structure of a connection component according to an embodiment of this application;
FIG. 12 is a schematic flowchart of a data transmission method according to an embodiment of this application; and
FIG. 13 is another schematic flowchart of a data transmission method according to an embodiment of this application.

### DESCRIPTION OF EMBODIMENTS

The following describes in detail technical solutions in embodiments of this application with reference to the accompanying drawings in embodiments of this application.

In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "have" and any other variants mean to cover a non-exclusive inclusion, so that a process, method, system, product, or device that includes a series of units is not necessarily limited to those units, but may include another unit not clearly listed or inherent to such a process, method, system, product, or device.

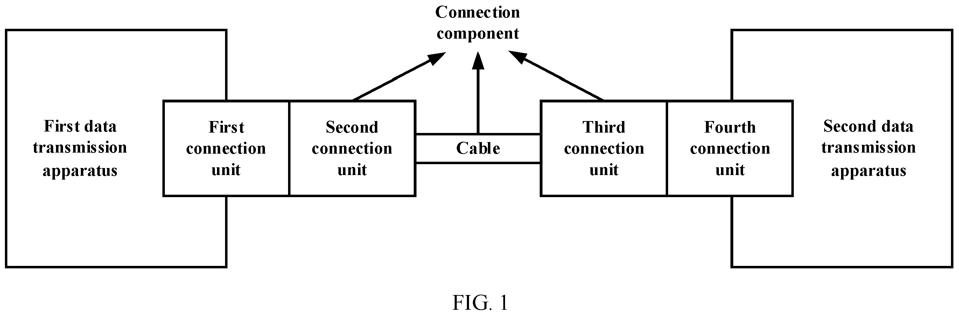

Embodiments of this application may be applied to a data transmission system. FIG. 1 is a schematic diagram of a structure of a data transmission system in a related technology. As shown in FIG. 1, the system includes a first data transmission apparatus, a second data transmission apparatus, and a connection component between the two apparatuses. The following briefly describes the data transmission apparatuses and the connection component separately.

The first data transmission apparatus may be an upstream port, for example, a portable terminal device such as a smartphone or a tablet computer, or a computer input device such as a mouse or a keyboard. The second data transmission apparatus may be a downstream port, for example, a terminal device such as a personal computer. The connection component may be a data line of a smartphone, a data line of a mouse, or the like. Certainly, the first data transmission apparatus may alternatively be a downstream port, and the second data transmission apparatus may alternatively be an upstream port. This is not limited herein.

When a user needs to perform data transmission between the first data transmission apparatus and the second data transmission apparatus, the user may connect the first data transmission apparatus and the second data transmission apparatus by using the connection component, to implement data transmission. Specifically, the first data transmission apparatus usually has a first connection unit, two ends of the connection component are usually a second connection unit and a third connection unit, and the second data transmission apparatus usually has a fourth connection unit. The first connection unit and the second connection unit may form a USB connector (for example, a USB Type-C connector), for example, a connector plug and a connection socket in pairs. Likewise, the third connection unit and the fourth connection unit may also form a USB connector, for example, a connector plug and a connection socket in pairs.

An example in which the first data transmission apparatus is a smartphone and the second data transmission apparatus is a personal computer is used for description. A socket in a USB connector is disposed on the smartphone, and a socket in a USB connector is also disposed on the personal computer. Both ends of a data line of the smartphone are plugs in a USB connector. In this way, after the user respectively inserts the two plugs on the data line into the socket of the mobile phone and the socket of the computer, data transmission can be implemented between the mobile phone and the computer.

In a related technology, for a socket and a plug in pairs, the socket is defined with two data pin pairs, that is, a D+ pin/a D- pin at positions A6/A7, and a D+ pin/a D- pin at positions B6/B7. The plug is defined with one data pin pair, that is, the D+ pin/the D- pin at the positions A6/A7. When the plug is inserted into the socket along a forward insertion direction, the pins at the positions A6/A7 on the plug are connected to the pins at the positions A6/A7 on the socket. When the plug is inserted into the socket along a reverse insertion direction, the pins at the positions A6/A7 on the plug are connected to the pins at the positions B6B7 on the socket, so that the connected pins complete data transmission.

In the foregoing process, when the plug is in the forward insertion state, only the pins at the positions A6/A7 on the socket are used; or when the plug is in the reverse insertion state, only the pins at the positions B6B7 on the socket are used, and the socket always has one data pin pair that is not in use, causing a waste of pin resources.

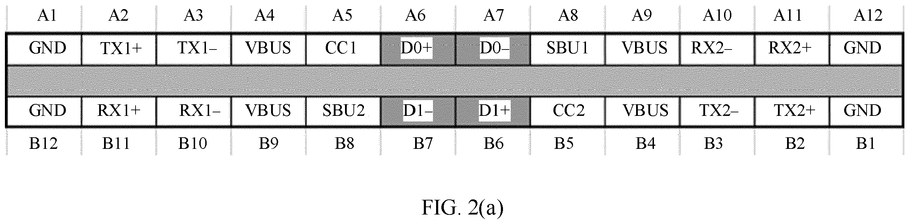

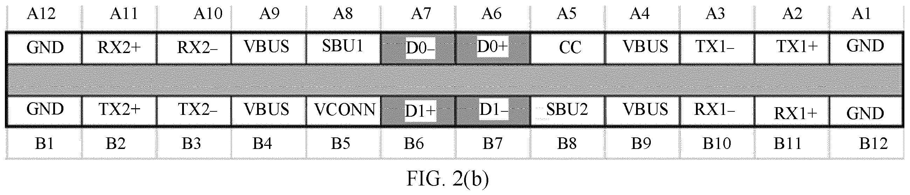

To resolve this problem, in embodiments of this application, a data pin of a connection unit is redefined in a plurality of manners, to effectively use pin resources. The following first describes a first manner of redefining a pin. For ease of description, the following uses a first data transmission apparatus used as an upstream port as an example for description. The first data transmission apparatus may be connected, by using a connection component, to a second data transmission apparatus used as a downstream port. Details are not described subsequently. FIG. 2(a) is a schematic diagram of a pin of a first connection unit of a first data transmission apparatus according to an embodiment of this application. FIG. 2(b) is a schematic diagram of a pin of a second connection unit of a connection component according to an embodiment of this application. It should be noted that, the first connection unit and the second connection unit form a complete USB connector, that is, a connector plug and a connector socket in pairs. For example, the first connection unit is a connector plug, and the second connection unit is a connector socket. For another example, the first connection unit is a connector socket, and the second connection unit is a connector plug. This is not limited herein.

The first connection unit of the first data transmission apparatus has a first data pin pair and a second data pin pair, and the first data pin pair and the second data pin pair are disposed centrosymmetrically based on a central point of the first connection unit. As shown in FIG. 2(a), the first data pin pair is pins at positions A6/A7. The pin pair is defined as a D0+ pin/a D0- pin, and "D0" corresponds to a first communication mode. The second data pin pair is pins at positions B6/B7. The pin pair is defined as a D1+ pin/a D1- pin, and "D1" corresponds to a second communication mode.

Similarly, in the second connection unit, a third data pin pair and a fourth data pin pair are defined, and the third data pin pair and the fourth data pin pair are centrosymmetrically disposed based on a central point of the second connection unit. As shown in FIG. 2(b), the third data pin pair is pins at positions A6/A7, and the pin pair is defined as a D0+ pin/a D0- pin. The fourth data pin pair is pins at positions B6/B7, and the pin pair is defined as a D1+ pin/a D1- pin.

When a user inserts the second connection unit into the first connection unit along a forward insertion direction, connection situations between the pins of the two connection units are as follows:
(1) The pin at the position A6 in the first connection unit is connected to the pin at the position A6 in the second connection unit, the pin at the position A7 in the first connection unit is connected to the pin at the position A7 in the second connection unit, the pin at the position B6 in the first connection unit is connected to the pin at the position B6 in the second connection unit, and the pin at the position B7 in the first connection unit is connected to the pin at the position B7 in the second connection unit, that is, the D0+ pin is connected to the D0+ pin, the D0- pin is connected to the D0- pin, the D1+ pin is connected to the D1+ pin, and the D1- pin is connected to the D1- pin. In this case, the first connection unit is in a forward insertion state, the pins are correctly connected, and the first connection unit and the second connection unit can work normally, so that both the first communication mode and the second communication mode are implemented.
(2) The pin at the position A6 in the first connection unit is connected to the pin at the position B6 in the second connection unit, the pin at the position A7 in the first connection unit is connected to the pin at the position B7 in the second connection unit, the pin at the position B6 in the first connection unit is connected to the pin at the position A6 in the second connection unit, and the pin at the position B7 in the first connection unit is connected to the pin at the position A7 in the second connection unit, that is, the D0+ pin is connected to the D1+ pin, the D0- pin is connected to the D1- pin, the D1+ pin is connected to the D0+ pin, and the D1- pin is connected to the D0- pin. In this case, the first connection unit is in a reverse insertion state, the pins are not correctly connected, and the first connection unit and the second connection unit cannot work normally, and cannot implement the first communication mode and the second communication mode.

To enable the two connection units to work normally when the first connection unit is in the forward insertion state and the reverse insertion state, a control unit is disposed inside the first data transmission apparatus, and the control unit may be configured to: if determining that the first connection unit is in the forward insertion state, control the first data pin pair to be in the first communication mode, and control the second data pin pair to be in the second communication mode, that is, in the first connection unit, the pins at the positions A6/A7 are set as a D0+ pin/a D0- pin, and the pins at the positions B6/B7 is set as a D1+ pin/a D1- pin; or if determining that the first connection unit is in the reverse insertion state, control the first data pin pair to be in the second communication mode, and control the second data pin pair to be in the first communication mode, that is, in the first connection unit, the pins at the positions A6/A7 are set as a D1+ pin/a D1- pin, and the pins at the positions B6B7 are set as a D0+ pin/a D0- pin. It can be learned that, when the first connection unit is in the reverse insertion state, the control unit may enable the first data pin pair and the second data pin pair to exchange roles.

In addition, even if the first connection unit is in the reverse insertion state, the third data pin pair and the fourth data pin pair on the second connection unit retain originally defined roles, that is, in the second connection unit, the pins at the positions A6/A7 are still kept as a D0+ pin/a D0- pin, and the pins at the positions B6/B7 are still kept as a D1+ pin/a D1- pin.

In this way, when the first connection unit is in the forward insertion state, the pins at the positions A6/A7 in the first connection unit are connected to the pins at the positions A6/A7 in the second connection unit, and the two pairs of pins are both a D0+ pin/a D0- pin, to implement the first communication mode. In the first communication mode, the two connected D0+ pins are configured to transmit a first signal (the D0+ pin of the first connection unit sends the first signal to the D0+ pin of the second connection unit, or the D0+ pin of the first connection unit receives the first signal from the D0+ pin of the second connection unit, and details are not described subsequently), the two connected D0- pins are configured to transmit a second signal, and the first signal and the second signal are signals in pairs. In addition, the pins at the positions B6B7 in the first connection unit are connected to the pins at the positions B6B7 in the second connection unit, and both the two pairs of pins are a D1+ pin/a D1- pin, to implement the second communication mode. In the second communication mode, the two connected D1+ pins are configured to transmit a third signal, the two connected D1- pins are configured to transmit a fourth signal, and the third signal and the fourth signal are signals in pairs.

Correspondingly, when the first connection unit is in the reverse insertion state, the pins at the positions A6/A7 in the first connection unit are connected to the pins at the positions B6B7 in the second connection unit, and the two pairs of pins are both a D1+ pin/a D1- pin, to implement the second communication mode. In the second communication mode, the two connected D1+ pins are configured to transmit a third signal, and the two connected D1- pins are configured to transmit a fourth signal. In addition, the pins at the positions B6B7 in the first connection unit are connected to the pins at the positions A6/A7 in the second connection unit, and both the two pairs of pins are a D0+ pin/a D0- pin, to implement the first communication mode. In the first communication mode, the two connected D1+ pins are configured to transmit a first signal, and the two connected D1- pins are configured to transmit a second signal.

Therefore, when determining that the first connection unit is in the reverse insertion state, the control circuit may perform a role exchange operation on the pins on the first connection unit, so that the first data pin pair and the second data pin pair still work normally while both the first communication mode and the second communication mode can be implemented.

It should be noted that the first communication mode and the second communication mode may be two communication modes having different service content in a same communication protocol. For example, both the first communication mode and the second communication mode are modes complying with a USB protocol, but carry different service content. Alternatively, the first communication mode and the second communication mode may be two communication modes in different communication protocols. For example, the first communication mode is a mode complying with a USB protocol, and the second communication mode is a mode complying with a fast charging protocol. For another example, the first communication mode is a mode complying with a USB protocol, and the second communication mode is a mode complying with a video transmission protocol. For another example, the first communication mode is a mode complying with a USB protocol, and the second communication mode is a mode complying with an I2C protocol. For another example, the first communication mode is a mode complying with a USB protocol, and the second communication mode is a hybrid mode complying with an I2C protocol and a GPIO protocol; and so on, which are separately described below.

In a possible implementation, in the first communication mode, the D0+ pin of the first connection unit is configured to transmit a first positive signal, and the D0- pin is configured to transmit a first negative signal. In the second communication mode, the D1+ pin is configured to transmit a second positive signal, and the D1- pin is configured to transmit a second negative signal. The first positive signal and the first negative signal are first differential signals complying with the USB protocol, and the second positive signal and the second negative signal are second differential signals complying with the USB protocol. Although both the first differential signal and the second differential signal comply with the USB protocol, the first differential signal and the second differential signal carry different service content. For example, it is assumed that the first data transmission apparatus is a device capable of implementing a mouse function and a keyboard function, and the device is connected to a peer computer through a data line. Regardless of whether the socket of the device is in the forward insertion state or the reverse insertion state, the control unit of the device can enable the socket of the device to simultaneously transmit a USB signal (that is, the first differential signal) for implementing the mouse function and a USB signal (that is, the second differential signal) for implementing the keyboard function, to implement the mouse function and the keyboard function between the device and the computer.

In another possible implementation, in the first communication mode, the D0+ pin of the first connection unit is configured to transmit a first positive signal, and the D0- pin is configured to transmit a first negative signal. In the second communication mode, the D1+ pin is configured to transmit a second positive signal, and the D1- pin is configured to transmit a second negative signal. The first positive signal and the first negative signal are differential signals complying with the USB protocol, and the second positive signal and the second negative signal are differential signals complying with another communication protocol different from the USB protocol. Specifically, the differential signal of another communication protocol may be a differential signal complying with the fast charging protocol, a differential signal complying with the video transmission protocol, or the like. For example, it is assumed that the first data transmission apparatus is a smartphone, and the smartphone is connected to a peer computer through a data line. Regardless of whether the socket of the mobile phone is in the forward insertion state or the reverse insertion state, the control unit of the device can enable the socket of the mobile phone to simultaneously transmit a USB signal and a signal used to implement a fast charging function, to implement USB signal transmission and the fast charging function between the mobile phone and the computer. For another example, it is assumed that the first data transmission apparatus is a smartphone, and the smartphone is connected to a peer computer through a data line. Regardless of whether the socket of the mobile phone is in the forward insertion state or the reverse insertion state, the control unit of the device can enable the socket of the mobile phone to simultaneously transmit a USB signal and a video signal, to implement USB signal transmission and video signal transmission between the mobile phone and the computer.

In another possible implementation, in the first communication mode, the D0+ pin of the first connection unit is configured to transmit a positive signal, and the D0- pin is configured to transmit a negative signal. In the second communication mode, the D1+ pin is configured to transmit a first single-ended signal, and the D1- pin is configured to transmit a second single-ended signal. The positive signal and the negative signal are differential signals complying with a USB protocol, and the first single-ended signal and the second single-ended signal are single-ended signals of a same type. Specifically, both the first single-ended signal and the second single-ended signal may be GPIO signals, or both the first single-ended signal and the second single-ended signal may be I2C signals, and the like. For example, it is assumed that the first data transmission apparatus is a smartphone, and the smartphone is connected to a peer computer through a data line. Regardless of whether the socket of the mobile phone is in the forward insertion state or the reverse insertion state, the control unit of the device can enable the socket of the mobile phone to simultaneously transmit a USB signal and a GPIO signal, to implement USB signal transmission and GPIO signal transmission between the mobile phone and the computer.

In another possible implementation, in the first communication mode, the D0+ pin of the first connection unit is configured to transmit a positive signal, and the D0- pin is configured to transmit a negative signal. In the second communication mode, the D1+ pin is configured to transmit a first single-ended signal, and the D1- pin is configured to transmit a second single-ended signal. The positive signal and the negative signal are differential signals complying with a USB protocol, and the first single-ended signal and the second single-ended signal are single-ended signals of different types. Specifically, the first single-ended signal may be a GPIO signal and the second single-ended signal is an I2C signal, or the first single-ended signal may be an I2C signal and the second single-ended signal is a GPIO signal, and the like. For example, it is assumed that the first data transmission apparatus is a smartphone, and the smartphone is connected to a peer computer through a data line. Regardless of whether the socket of the mobile phone is in the forward insertion state or the reverse insertion state, the control unit of the device can enable the socket of the mobile phone to simultaneously transmit a USB signal, a GPIO signal, and an I2C signal, to implement USB signal transmission, GPIO signal transmission, and I2C signal transmission between the mobile phone and the computer.

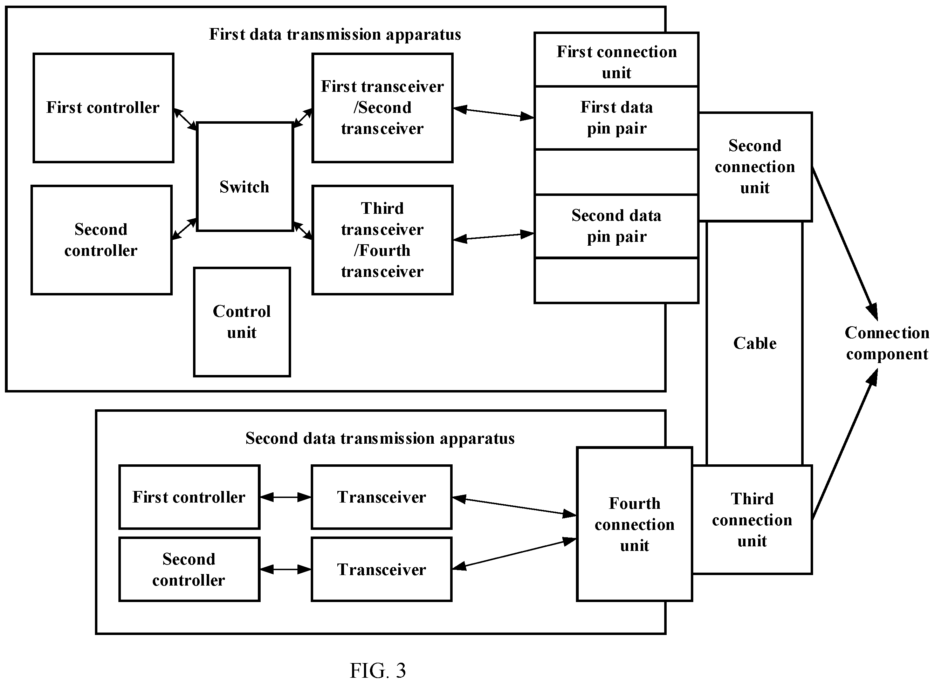

Further, when the control unit sets the first data pin pair (the pins at the positions A6/A7) of the first connection unit as a D0+ pin/a D0- pin or a D1+ pin/a D1- pin, the control unit may implement the setting by disposing a transceiver in the first data transmission apparatus. Likewise, this also applies to the second data pin pair (the pins at the positions B6B7). As shown in FIG. 3 (FIG. 3 is a schematic diagram of a structure of a data transmission system according to an embodiment of this application), the first data transmission apparatus may include two groups of transceivers, that is, a first transceiver and a second transceiver in pairs, and a third transceiver and a fourth transceiver in pairs. The first transceiver and the third transceiver are configured to implement the first communication mode, and the second transceiver and the fourth transceiver are configured to implement the second communication mode.

When determining that the first connection unit is in the forward insertion state, the control unit connects a first end of the first transceiver to the first data pin pair of the first connection unit, and disconnects a first end of the second transceiver from the first data pin pair (if an original connection status between the first end of the second transceiver and the first data pin pair is a disconnected state, the state is maintained). In addition, the control unit further disconnects a first end of the third transceiver from the second data pin pair, and connects a first end of the fourth transceiver to the second data pin pair. In this way, the first end of the first transceiver may transmit a first signal and a second signal with the first data pin pair, and the first end of the fourth transceiver may transmit a third signal and a fourth signal with the second data pin pair.

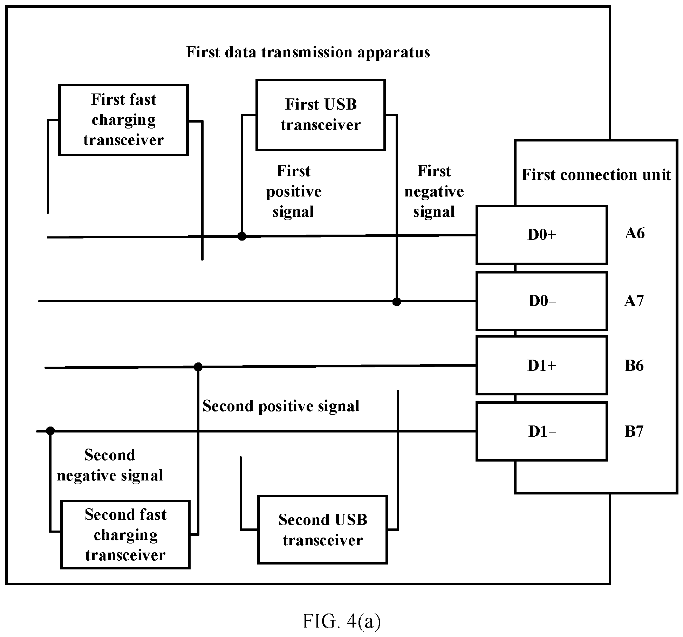

For example, as shown in FIG. 4(a) (FIG. 4(a) is a schematic diagram of a transceiver according to an embodiment of this application), it is assumed that the first transceiver and the third transceiver in the mobile phone are configured to implement a mode complying with the USB protocol, and the second transceiver and the fourth transceiver are configured to implement a mode complying with the fast charging protocol. In this case, the first transceiver is a first USB transceiver, the third transceiver is a second USB transceiver, the second transceiver is a first fast charging transceiver (or referred to as a fast charging transceiver circuit, fast charging transceiver logic, or the like), and the fourth transceiver is a second fast charging transceiver. If the socket of the mobile phone is in the forward insertion state, the control unit connects the first end of the first USB transceiver to the pins at the positions A6/A7 of the socket, and sets the pair of pins as a D0+ pin/a D0- pin, to send a first positive signal and a first negative signal or receive a first positive signal and a first negative signal on the pair of pins. In addition, the control unit further connects the first end of the second fast charging transceiver to the pins at the positions B6/B7 of the socket, and sets the pair of pins as a D1+ pin/a D1- pin, to send a second positive signal and a second negative signal or receive a second positive signal and a second negative signal on the pair of pins.

When determining that the first connection unit is in the reverse insertion state, the control unit disconnects the first end of the first transceiver from the first data pin pair of the first connection unit, and connects the first end of the second transceiver to the first data pin pair. In addition, the control unit further connects the first end of the third transceiver to the second data pin pair, and disconnects the first end of the fourth transceiver from the second data pin pair. In this way, the first end of the second transceiver may transmit a third signal and a fourth signal with the first data pin pair, and the first end of the third transceiver may transmit a first signal and a second signal with the second data pin pair.

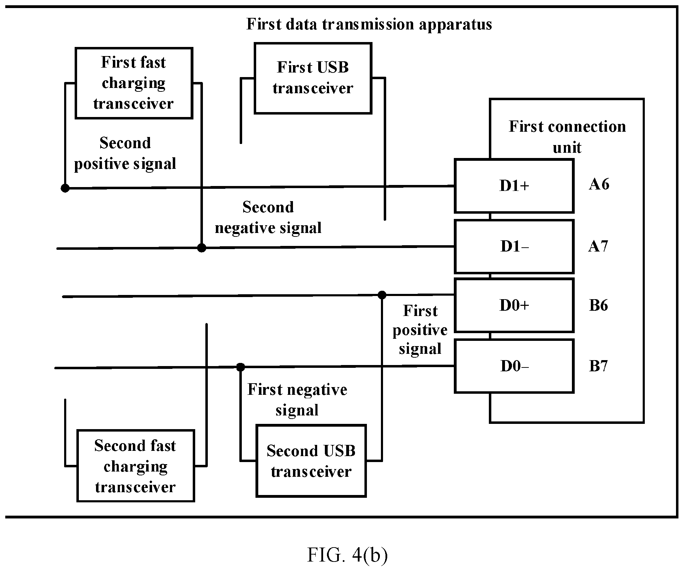

Still using the foregoing example, as shown in FIG. 4(b) (FIG. 4(b) is another schematic diagram of a transceiver according to an embodiment of this application), if the socket of the mobile phone is in the reverse insertion state, the control unit connects the first end of the first fast charging transceiver to the pins at positions A6/A7 of the socket, and sets the pair of pins as a D1+ pin/a D 1- pin, to send a second positive signal and a second negative signal or receive a second positive signal and a second negative signal on the pair of pins. In addition, the control unit further connects the first end of the second USB transceiver to the pins at the positions B6/B7 of the socket, and sets the pair of pins as a D0+ pin/a D0- pin, to send a first positive signal and a first negative signal, or receive a first positive signal and a first negative signal on the pair of pins.

Specifically, the control unit may implement the foregoing connection process and disconnection process in a plurality of manners.

In a possible implementation, as shown in FIG. 4(a), a switch is disposed between the first end of the first transceiver and the first data pin pair, between the first end of the second transceiver and the first data pin pair, between the first end of the third transceiver and the second data pin pair, and between the first end of the fourth transceiver and the second data pin pair. When determining that the first connection unit is in the forward insertion state, the control unit controls the switch between the first end of the first transceiver and the first data pin pair to be closed, the switch between the first end of the second transceiver and the first data pin pair to be opened, the switch between the first end of the third transceiver and the second data pin pair to be opened, and the switch between the first end of the fourth transceiver and the second data pin pair to be closed. When determining that the first connection unit is in the reverse insertion state, the control unit controls the switch between the first end of the first transceiver and the first data pin pair to be opened, the switch between the first end of the second transceiver and the first data pin pair to be closed, the switch between the first end of the third transceiver and the second data pin pair to be closed, and the switch between the first end of the fourth transceiver and the second data pin pair to be opened.

In a possible implementation, a circuit including a resistor, a capacitor, and an inductor is disposed inside each of the first transceiver, the second transceiver, the third transceiver, and the fourth transceiver. When determining that the first connection unit is in the forward insertion state, the control unit connects the circuit to the second transceiver and the third transceiver, so that the second transceiver and the third transceiver have high impedance and are in a disconnected state. When determining that the first connection unit is in the reverse insertion state, the control unit connects the circuit to the first transceiver and the fourth transceiver, so that the first transceiver and the fourth transceiver have high impedance and are in a disconnected state.

Further, to support function implementation of the first transceiver, the second transceiver, the third transceiver, and the fourth transceiver, as shown in FIG. 3, the first data transmission apparatus further includes a first controller configured to implement the first communication mode, a second controller configured to implement the second communication mode, and a switch. The first controller is configured to: process a received first signal and second signal, or output a first signal and a second signal. The second controller is configured to: process a received third signal and fourth signal, or output a third signal and a fourth signal.

The switch is controlled by the control unit. When determining that the first connection unit is in the forward insertion state, the control unit controls the switch to connect a second end of the first transceiver to the first controller and connect a second end of the fourth transceiver to the second controller. When determining that the first connection unit is in the reverse insertion state, the control unit controls the switch to connect a second end of the second transceiver to the second controller and connect a second end of the third transceiver to the second controller.

Still using the foregoing example, the first controller of the mobile phone is a USB controller, and the second controller is a fast charging controller (which may also be referred to as a fast charging control circuit, fast charging control logic, or the like). If the socket of the mobile phone is in the forward insertion state, the control unit controls the switch to connect the second end of the first USB transceiver to the USB controller, and connect the second end of the second fast charging transceiver to the fast charging controller. If the socket of the mobile phone is in the forward insertion state, the control unit controls the switch to connect the second end of the second USB transceiver to the USB controller, and connect the second end of the first fast charging transceiver to the fast charging controller. In this way, a controller and a transceiver that are configured to implement a same communication mode can always keep a connection, to ensure data transmission between data transmission apparatuses.

Still further, the control unit may determine, in a plurality of manners, that the first connection unit is in the forward insertion state or the reverse insertion state, which are separately described below.

In a possible implementation, the first connection unit has a detection pin (for example, a CC pin in FIG. 2(a)), where the pin is configured to detect that the first connection unit is in the forward insertion state or the reverse insertion state, generate a status signal, and send the status signal to the control unit, where the status signal is used to indicate whether the first connection unit is currently in the forward insertion state or the reverse insertion state. In this way, after receiving the status signal, the control unit may determine whether the first connection unit is currently in the forward insertion state or the reverse insertion state, and perform a corresponding control operation on the transceiver and the switch.

In another possible implementation, if the second transceiver and the fourth transceiver are fast charging transceivers, when the first data transmission apparatus and the second data transmission apparatus are connected together, the second transceiver in the first data transmission apparatus may detect whether a transceiver in the second data transmission apparatus connected thereto is a fast charging transceiver; and if yes, generate a status signal used to indicate that the first connection unit is in the forward insertion state; or if no, generate a status signal used to indicate that the first connection unit is in the reverse insertion state, and send the status signal to the control unit. In this way, after receiving the status signal, the control unit may determine whether the first connection unit is currently in the forward insertion state or the reverse insertion state, and perform a corresponding control operation on the transceiver and the switch.

In addition, the status signal may be further used to indicate that the first connection unit is in a connected state (that is, the first connection unit and the second connection unit are connected), and that it has not been determined whether the first connection unit is in the forward insertion state or the reverse insertion state. In this case, the control unit may determine, based on the status signal, that the first connection unit is in the connected state, and that it has not been determined whether the first connection unit is in the forward insertion state or the reverse insertion state, and then control the first transceiver and the second transceiver to be in a disconnected state, for example, completely disconnect the switch, so that the transceiver cannot be connected to the controller. In this way, when the control unit has not determined whether the first connection unit is in the forward insertion state or the reverse insertion state, even if the first connection unit is already connected to the second connection unit and is in the reverse insertion state (which has not been determined by the control unit), incorrect data can be effectively prevented from being transmitted between the first data transmission apparatus and the second data transmission apparatus.

It should be understood that, in FIG. 2(a) of this embodiment, the first data pin pair being the pins at the positions A6/A7 in the first connection unit is only used for illustration. Likewise, this also applies to the second data pin pair, which does not constitute a limitation on positions of the first data pin pair and the second data pin pair in the first connection unit. For example, the first data pin pair may alternatively be pins at positions A8/A9 in the first connection unit, and the second data pin pair may alternatively be pins at positions B8B9 in the first connection unit.

It should be further understood that in FIG. 3, FIG. 4(a), and FIG. 4(b), only an example in which each group of transceivers includes two transceivers is used for description, which does not constitute a limitation on a quantity of transceivers in each group of transceivers. For example, each group of transceivers may include only one transceiver, and the transceiver may implement switching between the first communication mode and the second communication mode under control of the control circuit. For another example, each group of transceivers may alternatively include three transceivers, that is, a USB transceiver, a GPIO transceiver, and an I2C transceiver.

In this embodiment, the data transmission apparatus includes a first connection unit and a control unit, where the first connection unit is a connector plug or a connector socket. When determining that the first connection unit is in the forward insertion state, the control unit controls the first data pin pair of the first connection unit to be in the first communication mode, and controls the second data pin pair of the first connection unit to be in the second communication mode; or when determining that the first connection unit is in the reverse insertion state, controls the first data pin pair to be in the second communication mode, and controls the second data pin pair to be in the first communication mode, where the first data pin pair and the second data pin pair are centrosymmetrically disposed in the first connection unit, and the first data pin pair or the second data pin pair is configured to transmit a valid signal in both the first communication mode and the second communication mode. In the foregoing apparatus, regardless of whether the first connection unit is in the forward insertion state or the reverse insertion state, the two data pin pairs of the first connection unit may simultaneously work in different communication modes to transmit valid signals, that is, both the two data pin pairs of the first connection unit are used, to effectively utilize pin resources and avoid a waste of pin resources.

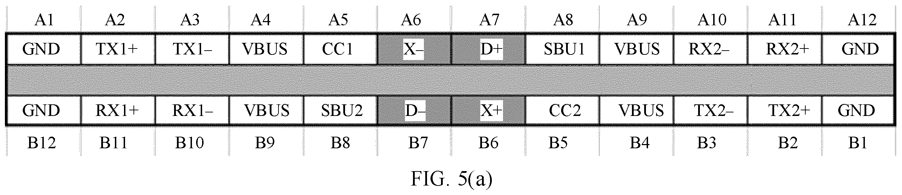

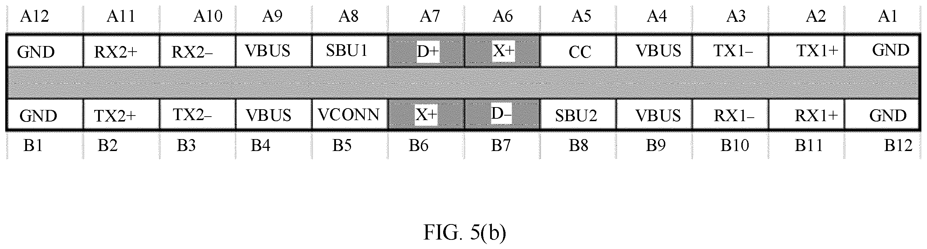

The foregoing describes in detail the first manner of redefining a pin, and the following describes a second manner of redefining a pin. FIG. 5(a) is a schematic diagram of another pin of a first connection unit of a first data transmission apparatus according to an embodiment of this application. FIG. 5(b) is a schematic diagram of another pin of a second connection unit of a connection component according to an embodiment of this application.

The first connection unit of the first data transmission apparatus has a first data pin, a second data pin, a third data pin, and a fourth data pin. The first data pin and the second data pin are disposed centrosymmetrically based on a central point of the first connection unit, and the third data pin and the fourth data pin are disposed centrosymmetrically based on the central point of the first connection unit. As shown in FIG. 5(a), the first data pin is a pin at a position A7, and the pin is defined as a D+ pin. The second data pin is a pin at a position B7, and the pin is defined as a D-pin. A first signal and a second signal are signals in pairs, and "D" corresponds to a first communication mode. The third data pin is a pin at a position B6, and the pin is defined as an X+ pin. The fourth data pin is a pin at a position A6, and the pin is defined as an X-pin. A third signal and a fourth signal are signals in pairs, and "X" corresponds to a second communication mode.

Likewise, as shown in FIG. 5(b), in the second connection unit, a pin at a position A7 is defined as a D+ pin. A pin at a position B7 is defined as a D- pin. A pin at a position A6 is defined as an X- pin, and a pin at a position B6 is defined as an X+ pin.

When a user inserts the second connection unit into the first connection unit along a forward insertion direction, connection situations between the pins of the two connection units are as follows:
(1) The pin at the position A7 in the first connection unit is connected to the pin at the position A7 in the second connection unit, the pin at the position B7 in the first connection unit is connected to the pin at the position B7 in the second connection unit, the pin at the position B6 in the first connection unit is connected to the pin at the position B6 in the second connection unit, and the pin at the position A6 in the first connection unit is connected to the pin at the position A6 in the second connection unit, that is, the D+ pin is connected to the D+ pin, the D- pin is connected to the D- pin, the X+ pin is connected to the X+ pin, and the X- pin is connected to the X- pin. In this case, the first connection unit is in a forward insertion state, the pins are correctly connected, and the first connection unit and the second connection unit can work normally, so that both the first communication mode and the second communication mode are implemented.
(2) The pin at the position A7 in the first connection unit is connected to the pin at the position B7 in the second connection unit, the pin at the position B7 in the first connection unit is connected to the pin at the position A7 in the second connection unit, the pin at the position B6 in the first connection unit is connected to the pin at the position A6 in the second connection unit, and the pin at the position A6 in the first connection unit is connected to the pin at the position B6 in the second connection unit, that is, the D+ pin is connected to the D- pin, the D- pin is connected to the D+ pin, the X+ pin is connected to the X- pin, and the X- pin is connected to the X+ pin. In this case, the first connection unit is in a reverse insertion state, the pins are not correctly connected, and the first connection unit and the second connection unit cannot work normally, and cannot implement the first communication mode and the second communication mode.

To enable the two connection units to work normally when the first connection unit is in the forward insertion state and the reverse insertion state, a control unit is disposed inside the first data transmission apparatus, and the control unit may be configured to: if determining that the first connection unit is in the forward insertion state, in the first connection unit, set the pin at the position A7 as a D+ pin, set the pin at the position B7 as a D- pin, set the pin at the position B6 as an X+ pin, and set the pin at the position A6 as an X- pin; or if determining that the first connection unit is in the reverse insertion state, in the first connection unit, set the pin at the position A7 as a D- pin, set the pin at the position B7 as a D+ pin, set the pin at the position B6 as an X- pin, and set the pin at the position A6 as an X+ pin. It can be learned that when the first connection unit is in the reverse insertion state, the control unit may enable the first data pin and the second data pin to exchange roles, and the third data pin and the fourth data pin to exchange roles.

In addition, even if the first connection unit is in the reverse insertion state, in the second connection unit, the pins at the positions A7B7 are still kept as a D+ pin/a D- pin, and the pins at the positions B6/A6 are still kept as an X+ pin/an X- pin.

In this way, when the first connection unit is in the forward insertion state, the pin at the position A7 in the first connection unit is connected to the pin at the position A7 in the second connection unit, and both the pins are D+ pins and are configured to transmit a first signal (the D0+ pin of the first connection unit sends a first signal to the D0+ pin of the second connection unit, or the D0+ pin of the first connection unit receives a first signal from the D0+ pin of the second connection unit, and details are not described subsequently). The pin at the position B7 in the first connection unit is connected to the pin at the position B7 in the second connection unit, and both the pins are D- pins and are configured to transmit a second signal. The pin at the position B6 in the first connection unit is connected to the pin at the position B6 in the second connection unit, and both the pins are X+ pins and are configured to transmit a third signal. The pin at the position A6 in the first connection unit is connected to the pin at the position A6 in the second connection unit, and both the pins are X- pins and are configured to transmit a fourth signal.

Correspondingly, when the first connection unit is in the reverse insertion state, the pin at the position A7 in the first connection unit is connected to the pin at the position B7 in the second connection unit, and both the pins are D- pins and are configured to transmit a second signal. The pin at the position B7 in the first connection unit is connected to the pin at the position A7 in the second connection unit, and both the pins are D+ pins and are configured to transmit a first signal. The pin at the position B6 in the first connection unit is connected to the pin at the position A6 in the second connection unit, and both the pins are X- pins and are configured to transmit a fourth signal. The pin at the position A6 in the first connection unit is connected to the pin at the position B6 in the second connection unit, and both the pins are X+ pins and are configured to transmit a third signal.

Therefore, when determining that the first connection unit is in the reverse insertion state, the control circuit may perform a role exchange operation on the pins on the first connection unit, so that the first data pin, the second data pin, the third data pin, and the fourth data pin still work normally while both the first communication mode and the second communication mode can be implemented.

It should be noted that the first communication mode and the second communication mode may be two communication modes with different service content in a same communication protocol, or the first communication mode and the second communication mode may be two communication modes in different communication protocols. Descriptions are provided below separately.

In a possible implementation, in the first communication mode, the D+ pin of the first connection unit is configured to transmit a first positive signal, and the D- pin is configured to transmit a first negative signal. In the second communication mode, the X+ pin is configured to transmit a second positive signal, and the X- pin is configured to transmit a second negative signal. The first positive signal and the first negative signal are first differential signals complying with the USB protocol, and the second positive signal and the second negative signal are second differential signals complying with the USB protocol. Although both the first differential signal and the second differential signal comply with the USB protocol, the first differential signal and the second differential signal carry different service content.

In another possible implementation, in the first communication mode, the D+ pin of the first connection unit is configured to transmit a first positive signal, and the D- pin is configured to transmit a first negative signal. In the second communication mode, the X+ pin is configured to transmit a second positive signal, and the X- pin is configured to transmit a second negative signal. The first positive signal and the first negative signal are differential signals complying with the USB protocol, and the second positive signal and the second negative signal are differential signals complying with another communication protocol different from the USB protocol. Specifically, a differential signal of another communication protocol may be a differential signal complying with the fast charging protocol, a differential signal complying with the video transmission protocol, or the like.

In another possible implementation, in the first communication mode, the D+ pin of the first connection unit is configured to transmit a positive signal, and the D- pin is configured to transmit a negative signal. In the second communication mode, the X+ pin is configured to transmit a first single-ended signal, and the X- pin is configured to transmit a second single-ended signal. The positive signal and the negative signal are differential signals complying with a USB protocol, and the first single-ended signal and the second single-ended signal are single-ended signals of a same type. Specifically, both the first single-ended signal and the second single-ended signal may be GPIO signals, or both the first single-ended signal and the second single-ended signal may be I2C signals, and the like.

In another possible implementation, in the first communication mode, the D+ pin of the first connection unit is configured to transmit a positive signal, and the D- pin is configured to transmit a negative signal. In the second communication mode, the X+ pin is configured to transmit a first single-ended signal, and the X- pin is configured to transmit a second single-ended signal. The positive signal and the negative signal are differential signals complying with a USB protocol, and the first single-ended signal and the second single-ended signal are single-ended signals of different types. Specifically, the first single-ended signal may be a GPIO signal and the second single-ended signal is an I2C signal, or the first single-ended signal may be an I2C signal and the second single-ended signal is a GPIO signal, and the like.

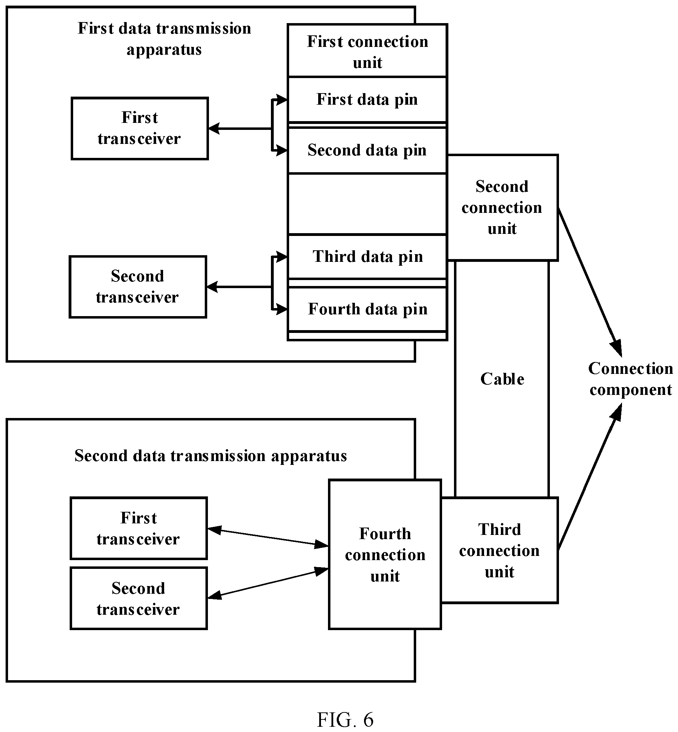

Further, when the control unit sets the first data pin and the second data pin (the pins at the positions A7B7) of the first connection unit as a D+ pin/a D- pin or a D- pin/a D+ pin, the control unit may implement the setting by disposing a transceiver in the first data transmission apparatus. Likewise, this also applies to the third data pin and the fourth data pin (the pins at the positions B6/A6). As shown in FIG. 6 (FIG. 6 is another schematic diagram of a structure of a data transmission system according to an embodiment of this application), the first data transmission apparatus may include a first transceiver and a second transceiver. The first transceiver is configured to implement the first communication mode, and the second transceiver is configured to implement the second communication mode.

The control unit may dispose the first transceiver and the second transceiver in a plurality of manners, which are separately described below.

In a possible implementation, a first end of the first transceiver is connected to the first data pin, a second end of the first transceiver is connected to the second data pin, a first end of the second transceiver is connected to the third data pin, and a second end of the second transceiver is connected to the fourth data pin. The first transceiver is a USB transceiver, and the second transceiver may be a fast charging transceiver, a video transceiver, or the like.

When determining that the first connection unit is in the reverse insertion state, the control unit negates a first signal transmitted by the first end of the first transceiver, so that the first end of the first transceiver transmits the second signal with the first data pin; negates a second signal transmitted by the second end of the first transceiver, so that the second end of the first transceiver transmits the first signal with the second data pin; negates a third signal transmitted by the first end of the second transceiver, so that the first end of the second transceiver transmits the fourth signal with the third data pin; and negates a fourth signal transmitted by the second end of the second transceiver, so that the second end of the second transceiver transmits the third signal with the fourth data pin.

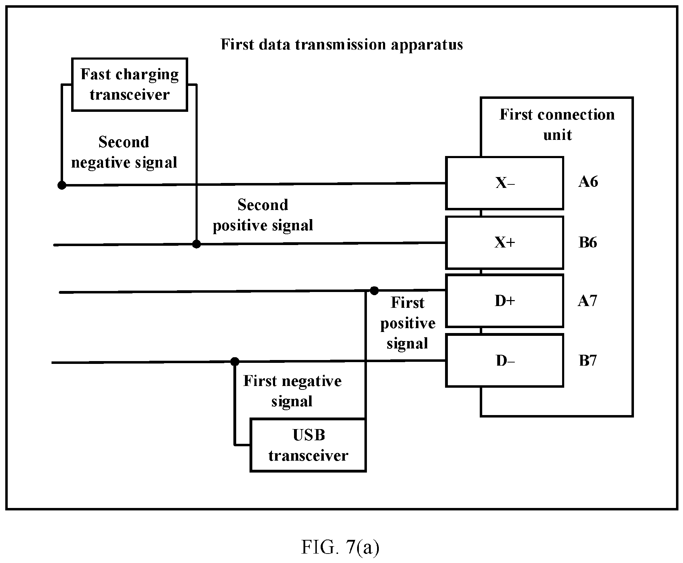

For example, as shown in FIG. 7(a) (FIG. 7(a) is another schematic diagram of a transceiver according to an embodiment of this application), it is assumed that a first transceiver in a mobile phone is a USB transceiver, and a second transceiver is a fast charging transceiver. A first end of the USB transceiver is connected to a pin at a position A7 in a socket, a second end of the USB transceiver is connected to a pin at a position B7 in the socket, a first end of the fast charging transceiver is connected to a pin at a position B6 in the socket, and a second end of the fast charging transceiver is connected to a pin at a position A6 in the socket. Such a physical connection relationship is fixed. If the socket of the mobile phone is in the forward insertion state, the control unit keeps a first positive signal transmitted by the first end of the USB transceiver, a first negative signal transmitted by the second end of the USB transceiver, a second positive signal transmitted by the first end of the fast charging transceiver, and a second negative signal transmitted by the second end of the fast charging transceiver unchanged, the pins at the positions A7B7 in the socket are kept as a D+ pin/a D- pin, and the pins at the positions B6A6 are kept as an X+ pin/an X- pin.

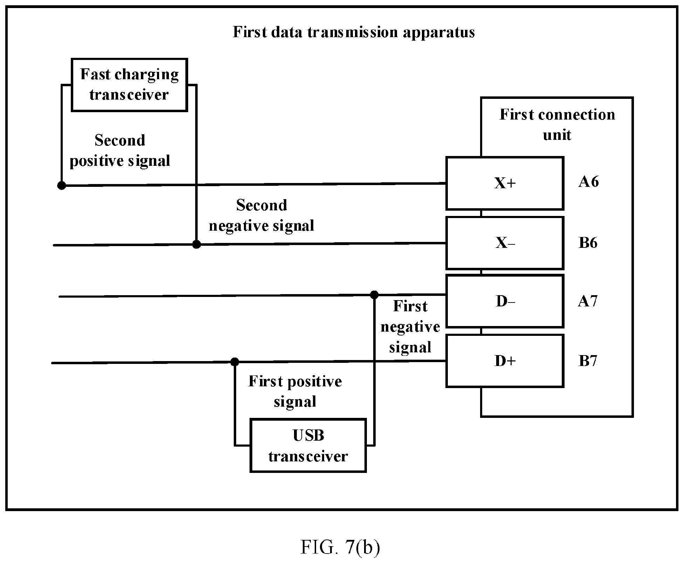

As shown in FIG. 7(b) (FIG. 7(b) is another schematic diagram of a transceiver according to an embodiment of this application), if the socket of the mobile phone is in the reverse insertion state, the control unit performs the following operations: negating a first positive signal transmitted by the first end of the USB transceiver, so that the first end of the USB transceiver transmits a first negative signal, which is equivalent to setting the pin at the position A7 from a D+ pin to a D- pin; negating a first negative signal transmitted by the second end of the USB transceiver, so that the second end of the USB transceiver transmits a first positive signal, which is equivalent to setting the pin at the position B7 from a D- pin to a D+ pin; negating a second positive signal transmitted by the first end of the fast charging transceiver, so that the first end of the fast charging transceiver transmits a second negative signal, which is equivalent to setting the pin at the position B6 from an X+ pin to an X- pin; and negating a second negative signal transmitted by the second end of the fast charging transceiver, so that the second end of the fast charging transceiver transmits a second positive signal, which is equivalent to setting the pin at the position A6 from an X- pin to an X+ pin.

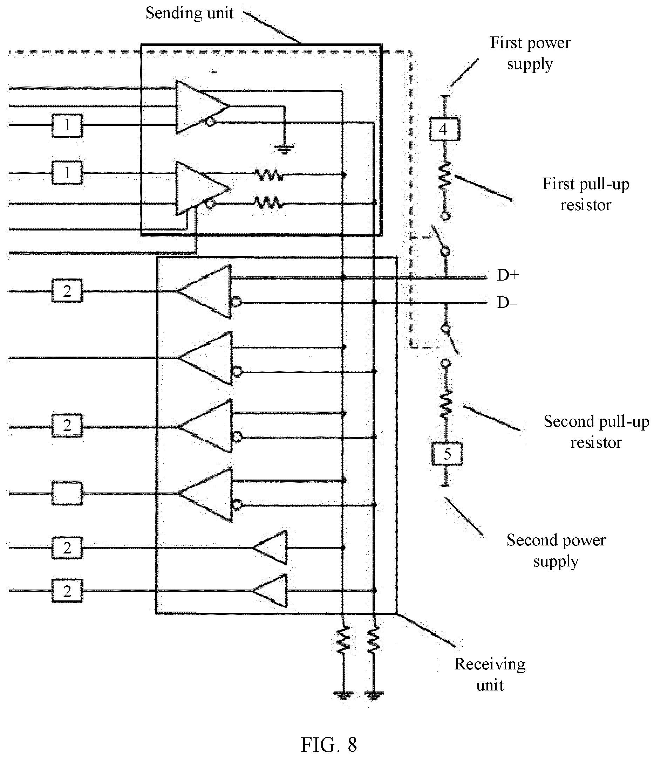

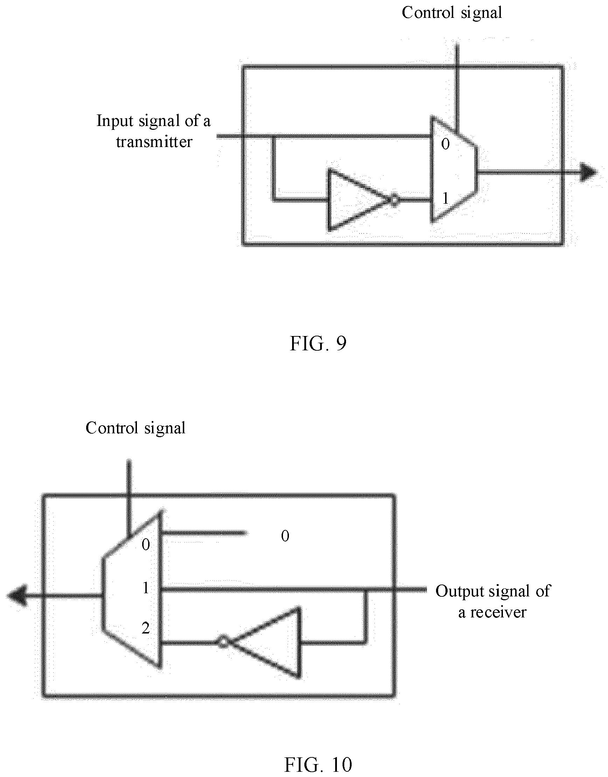

To further understand the foregoing process, the following further describes the process with reference to FIG. 8. FIG. 8 is a schematic diagram of a USB transceiver according to an embodiment of this application. As shown in FIG. 8, the USB transceiver includes a sending unit and a receiving unit. In a normal case, a first end of the sending unit may send a first positive signal to the pin at the position A7 in the socket, a second end of the sending unit may send a first negative signal to the pin at the position B7 in the socket, a first end of the receiving unit may receive a first positive signal from the pin at the position A7 in the socket, and a second end of the receiving unit may receive a first negative signal from the pin at the position B7 in the socket. A negation unit 1 is disposed at a third end of the sending unit, and a negation unit 2 is disposed at a third end of the receiving unit. A structure of the negation unit 1 is shown in FIG. 9 (FIG. 9 is a schematic diagram of a structure of the negation unit 1 according to an embodiment of this application), and a structure of the negation unit 2 is shown in FIG. 10 (FIG. 10 is a schematic diagram of a structure of the negation unit 2 according to an embodiment of this application).

The negation unit 1 includes a selector and a phase inverter, where a first input end of the selector is configured to receive an input signal from the sending unit, an input end of the phase inverter is configured to receive an input signal from the sending unit, an output end of the phase inverter is connected to a second input end of the selector, and an output end of the selector is connected to the third end of the sending unit. A control end of the phase inverter is configured to receive a control signal from the control unit. When determining that the socket of the mobile phone is in the forward insertion state, the control unit sends a control signal with a value of 0 to the negation unit 1, and the negation unit 1 does not negate an input signal from the sending unit. When determining that the socket of the mobile phone is in the reverse insertion state, the control unit sends a control signal with a value of 1 to the negation unit 1, and the negation unit 1 negates an input signal from the sending unit, so that the first end of the sending unit outputs a first negative signal to the pin at the position A7 in the socket, to set the pin from a D+ pin to a D- pin, and the first end of the sending unit outputs a first positive signal to the pin at the position B7 in the socket, to set the pin from a D- pin to a D+ pin.

The negation unit 2 includes a selector and a phase inverter, where a first input end of the selector is configured to receive an output signal from the receiving unit, an input end of the phase inverter is configured to receive an output signal from the receiving unit, an output end of the phase inverter is connected to a second input end of the selector, and an output end of the selector is configured to output a selected signal to a USB controller. A control end of the phase inverter is configured to receive a control signal from the control unit. When determining that the socket of the mobile phone is in the forward insertion state, the control unit sends a control signal with a value of 1 to the negation unit 2, and the negation unit 2 does not negate an output signal from the receiving unit. When determining that the socket of the mobile phone is in the reverse insertion state, the control unit sends a control signal with a value of 2 to the negation unit 2. The negation unit 2 negates an output signal from the receiving unit, which is equivalent to that the first end of the receiving unit receives a first negative signal from the pin at the position A7 in the socket, that is, the pin is set from a D+ pin to a D- pin, and which is equivalent to that the second end of the sending unit receives a first positive signal from the pin at the position B7 in the socket, that is, the pin is set from a D- pin to a D+ pin.

In addition, the USB transceiver further includes: a first pull-up resistor and a second pull-up resistor. A first end of the first pull-up resistor is connected to the first end of the sending unit, and a first end of the second pull-up resistor is connected to the second end of the sending unit. A switch 4 is disposed between a second end of the first pull-up resistor and a first power supply, and a switch 5 is disposed between a second end of the second pull-up resistor and a second power supply. When determining that the socket is in the forward insertion state, the control unit closes the switch 4 and opens the switch 5, which is equivalent to connecting the second end of the first pull-up resistor to the first power supply, and disconnecting the second end of the second pull-up resistor from the second power supply; or when determining that the socket is in the reverse insertion state, opens the switch 4 and closes the switch 5, which is equivalent to disconnecting the second end of the first pull-up resistor from the first power supply, and connecting the second end of the second pull-up resistor to the second power supply.

It should be noted that, for a signal negation process of a fast charging transceiver, refer to a related technology. Details are not described herein.

In another possible implementation, the first data transmission apparatus includes a switch, and the switch is disposed between the first connection unit and the first transceiver and between the first connection unit and the second transceiver. The control unit is configured to: if determining that the first connection unit is in the forward insertion state, perform the following operations by using the switch: connecting the first end of the first transceiver to the first data pin, so that the first end of the first transceiver transmits the first signal with the first data pin; connecting the second end of the first transceiver to the second data pin, so that the second end of the first transceiver transmits the second signal with the second data pin; connecting the first end of the second transceiver to the third data pin, so that the first end of the second transceiver transmits the third signal with the third data pin; and connecting the second end of the second transceiver to the fourth data pin, so that the second end of the second transceiver transmits the fourth signal with the fourth data pin; or
if determining that the first connection unit is in the reverse insertion state, perform the following operations by using the switch: connecting the first end of the first transceiver to the second data pin, so that the first end of the first transceiver transmits the second signal with the second data pin; connecting the second end of the first transceiver to the first data pin, so that the second end of the first transceiver transmits the first signal with the first data pin; connecting the first end of the second transceiver to the fourth data pin, so that the first end of the second transceiver transmits the fourth signal with the fourth data pin; and connecting the second end of the second transceiver to the third data pin, so that the second end of the second transceiver transmits the third signal with the third data pin.

For example, it is assumed that the first transceiver in the mobile phone is a USB transceiver, and the second transceiver is a fast charging transceiver. If determining that the socket of the mobile phone is in the forward insertion state, the control unit performs the following operations: connecting the first end of the USB transceiver to the pin at the position A7 in the socket, and connecting the second end of the USB transceiver to the pin at the position B7 in the socket, to set the pins at the positions A7/B7 as a D+ pin/a D- pin; and connecting the first end of the fast charging transceiver to the pin at the position B6 in the socket, and connecting the second end of the fast charging transceiver to the pin at the position A6 in the socket, to set the pins at the positions B6/A6 as an X+ pin/an X- pin.

If determining that the socket of the mobile phone is in the reverse insertion state, the control unit performs the following operations: connecting the first end of the USB transceiver to the pin at the position B7 in the socket, and connecting the second end of the USB transceiver to the pin at the position A7 in the socket, to set the pins at the positions A7/B7 as a D- pin/a D+ pin; and connecting the first end of the fast charging transceiver to the pin at the position A6 in the socket, and connecting the second end of the fast charging transceiver to the pin at the position B6 in the socket, to set the pins at the positions B6/A6 as an X- pin/an X+ pin.

Still further, the control unit may determine, in the following manner, that the first connection unit is in the forward insertion state or the reverse insertion state:
The first connection unit has a detection pin (for example, a CC pin in FIG. 5(a)), where the pin is configured to detect that the first connection unit is in the forward insertion state or the reverse insertion state, generate a status signal, and send the status signal to the control unit, where the status signal is used to indicate whether the first connection unit is currently in the forward insertion state or the reverse insertion state. In this way, after receiving the status signal, the control unit may determine whether the first connection unit is currently in the forward insertion state or the reverse insertion state, and perform a corresponding control operation on the transceiver and the switch.

In addition, the status signal may be further used to indicate that the first connection unit is in a connected state (that is, the first connection unit and the second connection unit are connected), and that it has not been determined whether the first connection unit is in the forward insertion state or the reverse insertion state. In this case, the control unit may determine, based on the status signal, that the first connection unit is in the connected state, and that it has not been determined whether the first connection unit is in the forward insertion state or the reverse insertion state, and then control the first transceiver and the second transceiver to be in a disconnected state. Still using the example shown in FIG. 8, when the control unit determines that the first connection unit is in the connected state, but has not determined whether the first connection unit is in the forward insertion state or the reverse insertion state, the control unit may send a control signal with a value of 0 to the negation unit 2, so that output of the negation unit 2 is kept as 0, which is equivalent to enabling the USB transceiver to be in the disconnected state. In this way, when the control unit has not determined whether the first connection unit is in the forward insertion state or the reverse insertion state, even if the first connection unit is already connected to the second connection unit and is in the reverse insertion state (which has not been determined by the control unit), incorrect data can be effectively prevented from being transmitted between the first data transmission apparatus and the second data transmission apparatus.

It should be understood that, in FIG. 5(a) of this embodiment, the first data pin and the second data pin being the pins at the positions A7B7 in the first connection unit are merely used as an example for description. Likewise, this also applies to the third data pin and the fourth data pin, and positions of the first data pin to the fourth data pin in the first connection unit are not limited. For example, the first data pin and the second data pin may alternatively be pins at positions A8/B8 in the first connection unit, and the third data pin and the fourth data pin may alternatively be pins at positions B9/A9 in the first connection unit.

It should be further understood that, in FIG. 3 and FIG. 4, only an example in which each group of transceivers includes one transceiver is used for description, which does not constitute a limitation on a quantity of transceivers in each group of transceivers. For example, one group of transceivers may include only one USB transceiver, and another group of transceivers may include two transceivers, that is, a GPIO transceiver and an I2C transceiver.

In this embodiment, the data transmission apparatus includes: a first connection unit, where the first connection unit is a connector plug or a connector socket, the first connection unit includes a first data pin, a second data pin, a third data pin, and a fourth data pin, the first data pin and the second data pin are centrosymmetrically disposed in the first connection unit, and the third data pin and the fourth data pin are centrosymmetrically disposed in the first connection unit. In the apparatus, when the first connection unit is in a forward insertion state, the first data pin is configured to transmit a first signal, the second data pin is configured to transmit a second signal, the third data pin is configured to transmit a third signal, and the fourth data pin is configured to transmit a fourth signal. When the first connection unit is in a reverse insertion state, the first data pin is configured to transmit a second signal, the second data pin is configured to transmit a first signal, the third data pin is configured to transmit a fourth signal, and the fourth data pin is configured to transmit a third signal. It can be learned that, regardless of whether the first connection unit is in the forward insertion state or the reverse insertion state, the two data pin pairs are used, thereby effectively using pin resources and avoiding a waste of pin resources.

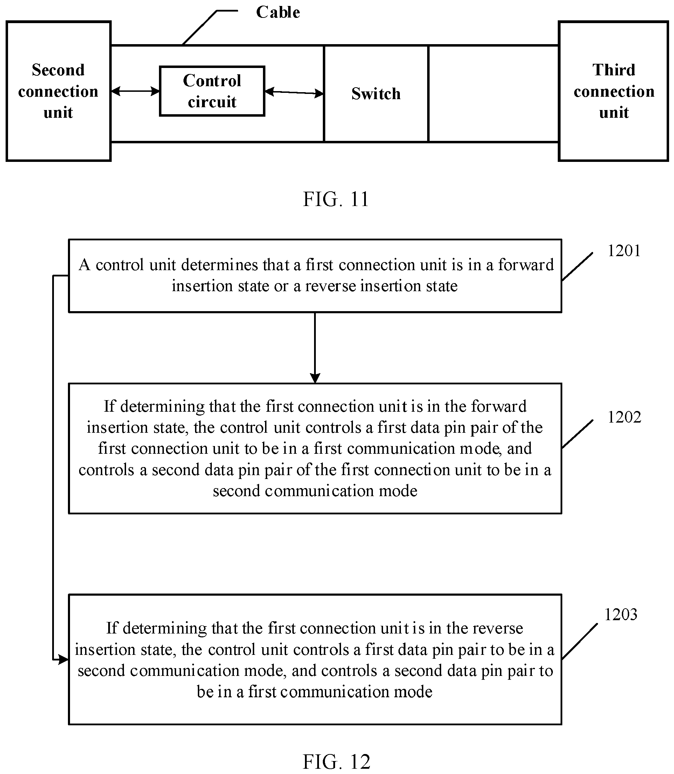

In the foregoing embodiment, if the first connection unit and the second connection unit are in the reverse insertion state, role exchange between pins is implemented on the first connection unit of the first data transmission apparatus. Based on FIG. 5(a) and FIG. 5(b), an embodiment of this application further provides a connection component, to implement role exchange between pins on a second connection unit of the connection component, to achieve a same effect as that in the foregoing embodiment. The following describes the connection component with reference to FIG. 11.

FIG. 11 is a schematic diagram of a structure of a connection component according to an embodiment of this application. As shown in FIG. 11, the connection component is connected between a first data transmission apparatus and a second data transmission apparatus, and the connection component includes: a second connection unit, a third connection unit, a switch, and a control unit, where the second connection unit is coupled to the first data transmission apparatus, the third connection unit is coupled to the second data transmission apparatus, the second connection unit is a connector plug or a connector socket, the third connection unit is a connector plug or a connector socket, and the second connection unit and the third connection unit are configured to transmit a first signal and a second signal in pairs, and a third signal and a fourth signal in pairs, to implement a first communication mode and a second communication mode between the first data transmission apparatus and the second data transmission apparatus.

It should be noted that, for pin settings of the second connection unit and the third connection unit, refer to FIG. 5(b). That is, the fifth data pin to the eighth data pin are pins at positions A7/B7/B6/A6 in the second connection unit, and the ninth data pin to the twelfth data pin are pins at positions A7/B7/B6/A6 in the third connection unit. Details are not described herein again. Further, for the first signal, the second signal, the third signal, the fourth signal, the first communication mode, and the second communication mode, refer to the foregoing related description. Details are not described herein again.

The control unit is configured to: if determining that the second connection unit is in a forward insertion state, operate and control the switch to implement the following operations: connecting a fifth data pin of the second connection unit to a ninth data pin of the third connection unit, to transmit the first signal between the first data transmission apparatus and the second data transmission apparatus by using the fifth data pin and the ninth data pin; connecting a sixth data pin of the second connection unit to a tenth data pin of the third connection unit, to transmit the second signal between the first data transmission apparatus and the second data transmission apparatus by using the sixth data pin and the tenth data pin; connecting a seventh data pin of the second connection unit to an eleventh data pin of the third connection unit, to transmit the third signal between the first data transmission apparatus and the second data transmission apparatus by using the seventh data pin and the eleventh data pin; and connecting an eighth data pin of the second connection unit to a twelfth data pin of the third connection unit, to transmit the fourth signal between the first data transmission apparatus and the second data transmission apparatus by using the fifth data pin and the twelfth data pin; or
if determining that the second connection unit is in a reverse insertion state, operate and control the switch to implement the following operations: connecting the fifth data pin to the tenth data pin, to transmit the second signal between the first data transmission apparatus and the second data transmission apparatus by using the fifth data pin and the tenth data pin; connecting the sixth data pin to the ninth data pin, to transmit the first signal between the first data transmission apparatus and the second data transmission apparatus by using the sixth data pin and the ninth data pin; connecting the seventh data pin to the twelfth data pin, to transmit the fourth signal between the first data transmission apparatus and the second data transmission apparatus by using the seventh data pin and the twelfth data pin; and connecting the eighth data pin to the eleventh data pin, to transmit the third signal between the first data transmission apparatus and the second data transmission apparatus by using the eighth data pin and the eleventh data pin.

For example, it is assumed that a first connection unit is a socket on a mobile phone, the second connection unit is a first plug of a data line, the third connection unit is a second plug of the data line, and a fourth connection unit is a socket on a computer.

If determining that the first plug is in the forward insertion state, the control unit may connect pins at positions A7/B7/B6/A6 in the first plug to pins at positions A7/B7/B6/A6 in the second plug. Because the pins at the positions A7/B7/B6/A6 in the first plug are connected to a D+ pin/a D- pin/an X+ pin/an X- pin of the socket of the mobile phone, and the pins at the positions A7/B7/B6/A6 in the second plug are connected to a D+ pin/a D- pin/an X+ pin/an X-pin of the socket of the computer (assume that the second plug is in the forward insertion state with the socket of the computer), the D+ pin/the D- pin/the X+ pin/the X- pin of the socket of the mobile phone can be correctly connected to the D+ pin/the D- pin/the X+ pin/the X- pin of the computer, to implement the first communication mode and the second communication mode.

If determining that the first plug is in the reverse insertion state, the control unit may connect the pins at the positions B7/A7/A6/B6 in the first plug to the pins at the positions A7/B7/B6/A6 in the second plug. Because the pins at the positions B7/A7/A6/B6 in the first plug are connected to the D+ pin/the D- pin/the X+ pin/the X- pin of the socket of the mobile phone, and the pins at the positions A7/B7/B6/A6 in the second plug are connected to the D+ pin/the D-pin/the X+ pin/the X- pin of the socket of the computer, the D+ pin/the D- pin/the X+ pin/the X-pin of the socket of the mobile phone can be correctly connected to the D+ pin/the D- pin/the X+ pin/the X- pin of the computer, to implement the first communication mode and the second communication mode.

Still further, the control unit may determine, in the following manner, that the second connection unit is in the forward insertion state or the reverse insertion state:
The second connection unit has a detection pin (for example, a CC pin in FIG. 5(b)), where the pin is configured to detect that the second connection unit is in the forward insertion state or the reverse insertion state, generate a status signal, and send the status signal to the control unit, where the status signal is used to indicate whether the second connection unit is currently in the forward insertion state or the reverse insertion state. In this way, after receiving the status signal, the control unit may determine whether the second connection unit is currently in the forward insertion state or the reverse insertion state, and perform a corresponding control operation on the transceiver and the switch.

In addition, the status signal may be further used to indicate that the second connection unit is in a connected state (that is, the first connection unit and the second connection unit are connected), and that it has not been determined whether the second connection unit is in the forward insertion state or the reverse insertion state. In this case, the control unit may determine, based on the status signal, that the second connection unit is in the connected state, but has not determined whether the second connection unit is in the forward insertion state or the reverse insertion state, and then disconnects the second connection unit and the third connection unit, that is, completely disconnects the switch. In this way, incorrect data can be effectively prevented from being transmitted between the first data transmission apparatus and the second data transmission apparatus.

In this embodiment, the control unit controls, based on an insertion state of the second connection unit, a connection relationship between two data pin pairs of the second connection unit and two data pin pairs of the third connection unit, so that the two pin pairs of both the second connection unit and the third connection unit can work normally, thereby implementing the first communication mode and the second communication mode. It can be learned that, regardless of whether the second connection unit is in the forward insertion state or the reverse insertion state, the two data pin pairs of the second connection unit of the connection component are used, thereby effectively using pin resources and avoiding a waste of pin resources.

The foregoing describes in detail the data transmission apparatus and the connection component provided in embodiments of this application. The following describes a data transmission method provided in embodiments of this application. FIG. 12 is a schematic flowchart of a data transmission method according to an embodiment of this application. The method is implemented by using a data transmission apparatus. The apparatus (referring to the first data transmission apparatus in the data transmission system shown in FIG. 3) includes a first connection unit and a control unit. The first connection unit is a connector plug or a connector socket. As shown in FIG. 3, the method includes:
1201: The control unit determines that the first connection unit is in a forward insertion state or a reverse insertion state.
1202: If determining that the first connection unit is in the forward insertion state, the control unit controls a first data pin pair of the first connection unit to be in a first communication mode, and controls a second data pin pair of the first connection unit to be in a second communication mode.
1203: If determining that the first connection unit is in the reverse insertion state, the control unit controls a first data pin pair to be in a second communication mode, and controls a second data pin pair to be in a first communication mode.

The first data pin pair and the second data pin pair are centrosymmetrically disposed in the first connection unit, and the first data pin pair or the second data pin pair is configured to transmit a valid signal in both the first communication mode and the second communication mode.

In a possible implementation, the first data pin pair is configured to transmit, in the first communication mode, a first differential signal complying with a universal serial bus USB protocol; and the first data pin pair is configured to transmit, in the second communication mode, a second differential signal complying with the USB protocol.

In a possible implementation, the first data pin pair is configured to transmit, in the first communication mode, a differential signal complying with a USB protocol; and the first data pin pair is configured to transmit, in the second communication mode, a differential signal complying with another communication protocol different from the USB protocol.

In a possible implementation, the first data pin pair is configured to transmit, in the first communication mode, a differential signal complying with a USB protocol; and the first data pin pair is configured to transmit, in the second communication mode, single-ended signals of a same type.

In a possible implementation, the first data pin pair is configured to transmit, in the first communication mode, a differential signal complying with a USB protocol; and the first data pin pair is configured to transmit, in the second communication mode, single-ended signals of different types.

In a possible implementation, the differential signal complying with another communication protocol different from the USB protocol includes a differential signal complying with a fast charging protocol or a differential signal complying with a video transmission protocol.

In a possible implementation, the single-ended signal is a general purpose input/output GPIO signal or an inter-integrated circuit I2C signal.

In a possible implementation, the apparatus further includes a first transceiver configured to implement the first communication mode and a second transceiver configured to implement the second communication mode; and that if determining that the first connection unit is in a forward insertion state, the control unit controls a first data pin pair of the first connection unit to be in a first communication mode, and controls a second data pin pair of the first connection unit to be in a second communication mode; or if determining that the first connection unit is in a reverse insertion state, controls the first data pin pair to be in the second communication mode, and controls the second data pin pair to be in the first communication mode includes: if determining that the first connection unit is in the forward insertion state, the control unit connects a first end of the first transceiver to the first data pin pair; or if determining that the first connection unit is in the reverse insertion state, connects a first end of the second transceiver to the first data pin pair.

In a possible implementation, the apparatus further includes a first controller configured to implement the first communication mode and a second controller configured to implement the second communication mode. The method further includes: if determining that the first connection unit is in the forward insertion state, the control unit connects a second end of the first transceiver to the first controller; or if determining that the first connection unit is in the reverse insertion state, connects a second end of the second transceiver to the second controller.

In a possible implementation, that the control unit determines that the first connection unit is in the forward insertion state or the reverse insertion state includes: the control unit obtains a status signal from a detection pin of the first connection unit, and determines, based on the status signal, that the first connection unit is in the forward insertion state or the reverse insertion state.

In a possible implementation, if the second transceiver and the fourth transceiver are fast charging transceivers, that the control unit determines that the first connection unit is in the forward insertion state or the reverse insertion state includes: the control unit obtains a status signal from the fast charging transceiver, and determines, based on the status signal, that the first connection unit is in the forward insertion state or the reverse insertion state.

In a possible implementation, the method further includes: if determining that the first connection unit is in a connected state, the control unit controls the first transceiver and the second transceiver to be in a disconnected state before determining that the first connection unit is in the forward insertion state or the reverse insertion state.

An embodiment of this application provides another data transmission method. The method is implemented by using a data transmission apparatus. The apparatus (for example, the first data transmission apparatus in the data transmission system shown in FIG. 6) includes: a first connection unit, where the first connection unit is a connector plug or a connector socket, the first connection unit includes a first data pin, a second data pin, a third data pin, and a fourth data pin, the first data pin and the second data pin are centrosymmetrically disposed in the first connection unit, and the third data pin and the fourth data pin are centrosymmetrically disposed in the first connection unit, and the method includes:
the first connection unit transmits a first signal by using the first data pin, and transmits a second signal by using the second data pin, where the first signal and the second signal are signals in pairs; and the first connection unit transmits a third signal by using the third data pin, and transmits a fourth signal by using the fourth data pin, where the third signal and the fourth signal are signals in pairs; or the first connection unit transmits the second signal by using the first data pin, and transmits the first signal by using the second data pin; and the first connection unit transmits the fourth signal by using the third data pin, and transmits the third signal by using the fourth data pin.

In a possible implementation, the first signal and the second signal are first differential signals complying with a USB protocol, and the third signal and the fourth signal are second differential signals complying with the USB protocol.

In a possible implementation, the first signal and the second signal are differential signals complying with a USB protocol, and the third signal and the fourth signal are differential signals complying with another communication protocol different from the USB protocol.

In a possible implementation, the first signal and the second signal are differential signals complying with a USB protocol, and the third signal and the fourth signal are single-ended signals of a same type.

In a possible implementation, the first signal and the second signal are differential signals complying with a USB protocol, and the third signal and the fourth signal are single-ended signals of different types.

In a possible implementation, the differential signal complying with another communication protocol different from the USB protocol includes a differential signal complying with a fast charging protocol or a differential signal complying with a video transmission protocol.

In a possible implementation, the single-ended signal is a general purpose input/output GPIO signal or an inter-integrated circuit I2C signal.

In a possible implementation, the apparatus further includes a control unit, a first transceiver, and a second transceiver. A first end of the first transceiver is connected to the first data pin, a second end of the first transceiver is connected to the second data pin, a first end of the second transceiver is connected to the third data pin, and a second end of the second transceiver is connected to the fourth data pin. The method further includes: if determining that the first connection unit is in the reverse insertion state, the control unit negates a first signal transmitted by the first end of the first transceiver, so that the first end of the first transceiver transmits the second signal with the first data pin; negates a second signal transmitted by the second end of the first transceiver, so that the second end of the first transceiver transmits the first signal with the second data pin; negates a third signal transmitted by the first end of the second transceiver, so that the first end of the second transceiver transmits the fourth signal with the third data pin; and negates a fourth signal transmitted by the second end of the second transceiver, so that the second end of the second transceiver transmits the third signal with the fourth data pin.

In a possible implementation, the first transceiver includes a first pull-up resistor and a second pull-up resistor, where a first end of the first pull-up resistor is connected to the first end of the first transceiver, and a first end of the second pull-up resistor is connected to the second end of the first transceiver; and the method further includes: if determining that the first connection unit is in a forward insertion state, the control unit connects a second end of the first pull-up resistor to a first power supply, and disconnects a second end of the second pull-up resistor from a second power supply; or if determining that the first connection unit is in the reverse insertion state, disconnects the second end of the first pull-up resistor from the first power supply, and connects the second end of the second pull-up resistor to the second power supply.

In a possible implementation, the apparatus further includes a control unit, a first transceiver, and a second transceiver. The method further includes: if determining that the first connection unit is in a forward insertion state, the control unit performs the following operations: connecting a first end of the first transceiver to the first data pin, so that the first end of the first transceiver transmits the first signal with the first data pin; connecting a second end of the first transceiver to the second data pin, so that the second end of the first transceiver transmits the second signal with the second data pin; connecting a first end of the second transceiver to the third data pin, so that the first end of the second transceiver transmits the third signal with the third data pin; and connecting a second end of the second transceiver to the fourth data pin, so that the second end of the second transceiver transmits the fourth signal with the fourth data pin; or if determining that the first connection unit is in a reverse insertion state, performs the following operations: connecting a first end of the first transceiver to the second data pin, so that the first end of the first transceiver transmits the second signal with the second data pin; connecting a second end of the first transceiver to the first data pin, so that the second end of the first transceiver transmits the first signal with the first data pin; connecting a first end of the second transceiver to the fourth data pin, so that the first end of the second transceiver transmits the fourth signal with the fourth data pin; and connecting the second end of the second transceiver to the third data pin, so that the second end of the second transceiver transmits the third signal with the third data pin.

In a possible implementation, that the control unit determines that the first connection unit is in the forward insertion state or the reverse insertion state includes: the control unit obtains a status signal from a detection pin of the first connection unit, and determines, based on the status signal, that the first connection unit is in the forward insertion state or the reverse insertion state.

In a possible implementation, the method further includes: if determining that the first connection unit is in a connected state, the control unit controls the first transceiver and the second transceiver to be in a disconnected state before determining that the first connection unit is in the forward insertion state or the reverse insertion state.

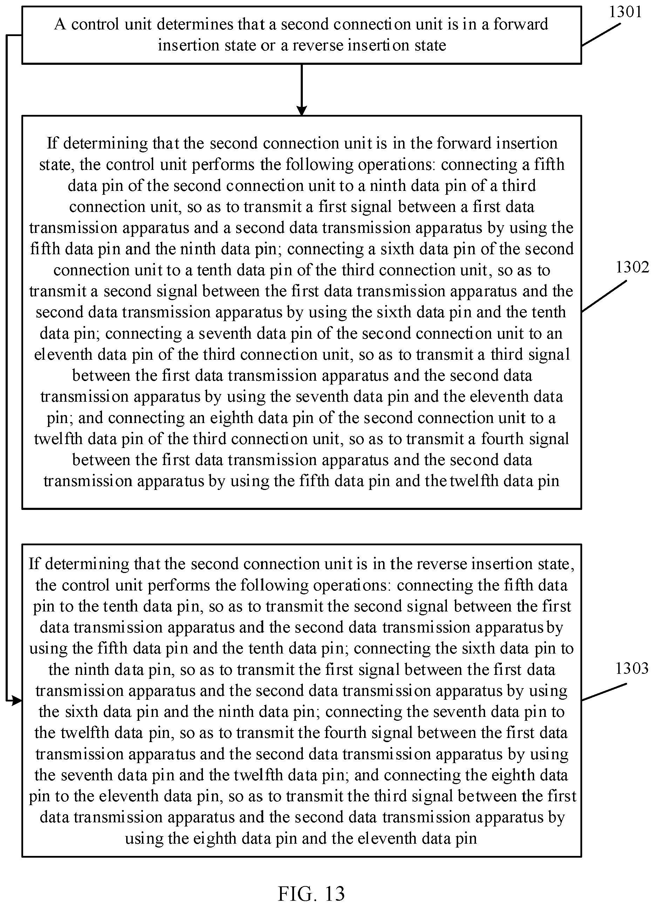

FIG. 13 is another schematic flowchart of a data transmission method according to an embodiment of this application. The method is implemented by using a connection component. The connection part (referring to FIG. 11) is connected between a first data transmission apparatus and a second data transmission apparatus. The connection component includes: a second connection unit, a third connection unit, and a control unit, where the second connection unit is coupled to the first data transmission apparatus, the third connection unit is coupled to the second data transmission apparatus, the second connection unit is a connector plug or a connector socket, the third connection unit is a connector plug or a connector socket, and the second connection unit and the third connection unit are configured to transmit a first signal and a second signal in pairs, and a third signal and a fourth signal in pairs. As shown in FIG. 13, the method includes:
1301: The control unit determines that the second connection unit is in a forward insertion state or a reverse insertion state.
1302: If determining that the second connection unit is in the forward insertion state, the control unit performs the following operations: connecting a fifth data pin of the second connection unit to a ninth data pin of the third connection unit, to transmit the first signal between the first data transmission apparatus and the second data transmission apparatus by using the fifth data pin and the ninth data pin; connecting a sixth data pin of the second connection unit to a tenth data pin of the third connection unit, to transmit the second signal between the first data transmission apparatus and the second data transmission apparatus by using the sixth data pin and the tenth data pin; connecting a seventh data pin of the second connection unit to an eleventh data pin of the third connection unit, to transmit the third signal between the first data transmission apparatus and the second data transmission apparatus by using the seventh data pin and the eleventh data pin; and connecting an eighth data pin of the second connection unit to a twelfth data pin of the third connection unit, to transmit the fourth signal between the first data transmission apparatus and the second data transmission apparatus by using the fifth data pin and the twelfth data pin.
1303: If determining that the second connection unit is in the reverse insertion state, the control unit performs the following operations: connecting the fifth data pin to the tenth data pin, to transmit the second signal between the first data transmission apparatus and the second data transmission apparatus by using the fifth data pin and the tenth data pin; connecting the sixth data pin to the ninth data pin, to transmit the first signal between the first data transmission apparatus and the second data transmission apparatus by using the sixth data pin and the ninth data pin; connecting the seventh data pin to the twelfth data pin, to transmit the fourth signal between the first data transmission apparatus and the second data transmission apparatus by using the seventh data pin and the twelfth data pin; and connecting the eighth data pin to the eleventh data pin, to transmit the third signal between the first data transmission apparatus and the second data transmission apparatus by using the eighth data pin and the eleventh data pin.

The fifth data pin and the sixth data pin are centrosymmetrically disposed in the second connection unit, the seventh data pin and the eighth data pin are centrosymmetrically disposed in the second connection unit, the ninth data pin and the tenth pin are centrosymmetrically disposed in the third connection unit, and the eleventh data pin and the twelfth pin are centrosymmetrically disposed in the third connection unit.

In a possible implementation, the first signal and the second signal are first differential signals complying with a USB protocol, and the third signal and the fourth signal are second differential signals complying with the USB protocol.

In a possible implementation, the first signal and the second signal are differential signals complying with a USB protocol, and the third signal and the fourth signal are differential signals complying with another communication protocol different from the USB protocol.

In a possible implementation, the first signal and the second signal are differential signals complying with a USB protocol, and the third signal and the fourth signal are single-ended signals of a same type.

In a possible implementation, the first signal and the second signal are differential signals complying with a USB protocol, and the third signal and the fourth signal are single-ended signals of different types.

In a possible implementation, the differential signal complying with another communication protocol different from the USB protocol includes a differential signal complying with a fast charging protocol or a differential signal complying with a video transmission protocol.

In a possible implementation, the single-ended signal is a general purpose input/output GPIO signal or an inter-integrated circuit I2C signal.

In a possible implementation, that the control unit determines that the second connection unit is in the forward insertion state or the reverse insertion state includes: the control unit obtains a status signal from a detection pin of the second connection unit, and determines, based on the status signal, that the second connection unit is in the forward insertion state or the reverse insertion state.

In a possible implementation, the method further includes: if determining that the second connection unit is in a connected state, the control unit disconnects the second connection unit from the third connection unit before determining that the second connection unit is in the forward insertion state or the reverse insertion state.

It should be noted that content such as information exchange between the modules/units of the method and the execution processes thereof is based on the same idea as the apparatus embodiments of this application, and produces the same technical effects as the apparatus embodiments of this application. For the specific content, refer to the foregoing descriptions in the apparatus embodiments of this application. Details are not described herein again.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

## Claims

1. A data transmission apparatus, wherein the apparatus comprises a first connection unit and a control unit, and the first connection unit is a connector plug or a connector socket; and
the control unit is configured to: if determining that the first connection unit is in a forward insertion state, control a first data pin pair of the first connection unit to be in a first communication mode, and control a second data pin pair of the first connection unit to be in a second communication mode; or if determining that the first connection unit is in a reverse insertion state, control the first data pin pair to be in the second communication mode, and control the second data pin pair to be in the first communication mode;
wherein the first data pin pair and the second data pin pair are centrosymmetrically disposed in the first connection unit, and the first data pin pair or the second data pin pair is configured to transmit a valid signal in both the first communication mode and the second communication mode.

2. The apparatus according to claim 1, wherein the first data pin pair is configured to transmit, in the first communication mode, a first differential signal complying with a universal serial bus USB protocol; and
the first data pin pair is configured to transmit, in the second communication mode, a second differential signal complying with the USB protocol or a differential signal complying with another communication protocol different from the USB protocol.

3. The apparatus according to claim 1, wherein the first data pin pair is configured to transmit, in the first communication mode, a differential signal complying with a USB protocol; and
the first data pin pair is configured to transmit, in the second communication mode, single-ended signals of a same type or single-ended signals of different types.

4. The apparatus according to claim 2, wherein the differential signal complying with another communication protocol different from the USB protocol comprises a differential signal complying with a fast charging protocol or a differential signal complying with a video transmission protocol.

5. The apparatus according to claim 3, wherein the single-ended signal is a general purpose input/output GPIO signal or an inter-integrated circuit I2C signal.

6. The apparatus according to any one of claims 1 to 5, wherein the apparatus further comprises a first transceiver configured to implement the first communication mode and a second transceiver configured to implement the second communication mode; and
the control unit is specifically configured to: if determining that the first connection unit is in the forward insertion state, connect a first end of the first transceiver to the first data pin pair; or
if determining that the first connection unit is in the reverse insertion state, connect a first end of the second transceiver to the first data pin pair.

7. The apparatus according to claim 6, wherein the apparatus further comprises a first controller configured to implement the first communication mode and a second controller configured to implement the second communication mode; and
the control unit is further configured to: if determining that the first connection unit is in the forward insertion state, connect a second end of the first transceiver to the first controller; or
if determining that the first connection unit is in the reverse insertion state, connect a second end of the second transceiver to the second controller.

8. The apparatus according to claim 6 or 7, wherein the control unit is further configured to: if determining that the first connection unit is in a connected state, control the first transceiver and the second transceiver to be in a disconnected state before determining that the first connection unit is in the forward insertion state or the reverse insertion state.

9. A data transmission apparatus, wherein the apparatus comprises a first connection unit, the first connection unit is a connector plug or a connector socket, the first connection unit comprises a first data pin, a second data pin, a third data pin, and a fourth data pin, the first data pin and the second data pin are centrosymmetrically disposed in the first connection unit, and the third data pin and the fourth data pin are centrosymmetrically disposed in the first connection unit;
the first data pin is configured to transmit a first signal, and the second data pin is configured to transmit a second signal; or the first data pin is configured to transmit the second signal, and the second data pin is configured to transmit the first signal, wherein the first signal and the second signal are signals in pairs; and
the third data pin is configured to transmit a third signal, and the fourth data pin is configured to transmit a fourth signal; or the third data pin is configured to transmit the fourth signal, and the fourth data pin is configured to transmit the third signal, wherein the third signal and the fourth signal are signals in pairs.

10. The apparatus according to claim 9, wherein the first signal and the second signal are first differential signals complying with a USB protocol; and
the third signal and the fourth signal are second differential signals complying with the USB protocol, or the third signal and the fourth signal are differential signals complying with another communication protocol different from the USB protocol.

11. The apparatus according to claim 10, wherein the differential signal complying with another communication protocol different from the USB protocol is a differential signal complying with a fast charging protocol or a differential signal complying with a video transmission protocol.

12. The apparatus according to any one of claims 9 to 11, wherein the apparatus further comprises a control unit, a first transceiver, and a second transceiver, a first end of the first transceiver is connected to the first data pin, a second end of the first transceiver is connected to the second data pin, a first end of the second transceiver is connected to the third data pin, and a second end of the second transceiver is connected to the fourth data pin; and
the control unit is configured to: if determining that the first connection unit is in a reverse insertion state, negate a first signal transmitted by the first end of the first transceiver, so that the first end of the first transceiver transmits the second signal with the first data pin;
negate a second signal transmitted by the second end of the first transceiver, so that the second end of the first transceiver transmits the first signal with the second data pin;
negate a third signal transmitted by the first end of the second transceiver, so that the first end of the second transceiver transmits the fourth signal with the third data pin; and
negate a fourth signal transmitted by the second end of the second transceiver, so that the second end of the second transceiver transmits the third signal with the fourth data pin.

13. The apparatus according to claim 12, wherein the first transceiver comprises a first pull-up resistor and a second pull-up resistor, a first end of the first pull-up resistor is connected to the first end of the first transceiver, and a first end of the second pull-up resistor is connected to the second end of the first transceiver; and
the control unit is further configured to: if determining that the first connection unit is in a forward insertion state, connect a second end of the first pull-up resistor to a first power supply, and disconnect a second end of the second pull-up resistor from a second power supply; or if determining that the first connection unit is in the reverse insertion state, disconnect the second end of the first pull-up resistor from the first power supply, and connect the second end of the second pull-up resistor to the second power supply.

14. The apparatus according to any one of claims 9 to 11, wherein the apparatus further comprises a control unit, a first transceiver, and a second transceiver, wherein:
the control unit is configured to: if determining that the first connection unit is in a forward insertion state, perform the following operations:
connecting a first end of the first transceiver to the first data pin, so that the first end of the first transceiver transmits the first signal with the first data pin;
connecting a second end of the first transceiver to the second data pin, so that the second end of the first transceiver transmits the second signal with the second data pin;
connecting a first end of the second transceiver to the third data pin, so that the first end of the second transceiver transmits the third signal with the third data pin; and
connecting a second end of the second transceiver to the fourth data pin, so that the second end of the second transceiver transmits the fourth signal with the fourth data pin; or
if determining that the first connection unit is in a reverse insertion state, perform the following operations:
connecting a first end of the first transceiver to the second data pin, so that the first end of the first transceiver transmits the second signal with the second data pin;
connecting a second end of the first transceiver to the first data pin, so that the second end of the first transceiver transmits the first signal with the first data pin;
connecting a first end of the second transceiver to the fourth data pin, so that the first end of the second transceiver transmits the fourth signal with the fourth data pin; and
connecting the second end of the second transceiver to the third data pin, so that the second end of the second transceiver transmits the third signal with the third data pin.

15. The apparatus according to any one of claims 12 to 14, wherein the control unit is further configured to: if determining that the first connection unit is in a connected state, control the first transceiver and the second transceiver to be in a disconnected state before determining that the first connection unit is in the forward insertion state or the reverse insertion state.

16. A connection component, wherein the connection component is connected between a first data transmission apparatus and a second data transmission apparatus, and the connection component comprises: a second connection unit, a third connection unit, and a control unit, wherein the second connection unit is coupled to the first data transmission apparatus, the third connection unit is coupled to the second data transmission apparatus, the second connection unit is a connector plug or a connector socket, the third connection unit is a connector plug or a connector socket, and the second connection unit and the third connection unit are configured to transmit a first signal and a second signal in pairs, and a third signal and a fourth signal in pairs; and
the control unit is configured to: if determining that the second connection unit is in a forward insertion state, perform the following operations:
connecting a fifth data pin of the second connection unit to a ninth data pin of the third connection unit, to transmit the first signal between the first data transmission apparatus and the second data transmission apparatus by using the fifth data pin and the ninth data pin;
connecting a sixth data pin of the second connection unit to a tenth data pin of the third connection unit, to transmit the second signal between the first data transmission apparatus and the second data transmission apparatus by using the sixth data pin and the tenth data pin;
connecting a seventh data pin of the second connection unit to an eleventh data pin of the third connection unit, to transmit the third signal between the first data transmission apparatus and the second data transmission apparatus by using the seventh data pin and the eleventh data pin; and
connecting an eighth data pin of the second connection unit to a twelfth data pin of the third connection unit, to transmit the fourth signal between the first data transmission apparatus and the second data transmission apparatus by using the fifth data pin and the twelfth data pin; or
if determining that the second connection unit is in a reverse insertion state, perform the following operations:
connecting the fifth data pin to the tenth data pin, to transmit the second signal between the first data transmission apparatus and the second data transmission apparatus by using the fifth data pin and the tenth data pin;
connecting the sixth data pin to the ninth data pin, to transmit the first signal between the first data transmission apparatus and the second data transmission apparatus by using the sixth data pin and the ninth data pin;
connecting the seventh data pin to the twelfth data pin, to transmit the fourth signal between the first data transmission apparatus and the second data transmission apparatus by using the seventh data pin and the twelfth data pin; and
connecting the eighth data pin to the eleventh data pin, to transmit the third signal between the first data transmission apparatus and the second data transmission apparatus by using the eighth data pin and the eleventh data pin;
wherein the fifth data pin and the sixth data pin are centrosymmetrically disposed in the second connection unit, the seventh data pin and the eighth data pin are centrosymmetrically disposed in the second connection unit, the ninth data pin and the tenth pin are centrosymmetrically disposed in the third connection unit, and the eleventh data pin and the twelfth pin are centrosymmetrically disposed in the third connection unit.

17. The connection component according to claim 16, wherein the first signal and the second signal are first differential signals complying with a USB protocol; and
the third signal and the fourth signal are second differential signals complying with the USB protocol, or the third signal and the fourth signal are differential signals complying with another communication protocol different from the USB protocol.

18. The connection component according to claim 16 or 17, wherein the control unit is further configured to: if determining that the second connection unit is in a connected state, disconnect the second connection unit from the third connection unit before determining that the second connection unit is in the forward insertion state or the reverse insertion state.

19. A data transmission method, wherein the method is applied to a data transmission apparatus, the apparatus comprises a first connection unit and a control unit, the first connection unit is a connector plug or a connector socket, and the method comprises:
if determining that the first connection unit is in a forward insertion state, controlling, by the control unit, a first data pin pair of the first connection unit to be in a first communication mode, and controlling a second data pin pair of the first connection unit to be in a second communication mode; or if determining that the first connection unit is in a reverse insertion state, controlling the first data pin pair to be in the second communication mode, and controlling the second data pin pair to be in the first communication mode;
wherein the first data pin pair and the second data pin pair are centrosymmetrically disposed in the first connection unit, and the first data pin pair or the second data pin pair is configured to transmit a valid signal in both the first communication mode and the second communication mode.

20. The method according to claim 19, wherein the first data pin pair is configured to transmit, in the first communication mode, a first differential signal complying with a universal serial bus USB protocol; and
the first data pin pair is configured to transmit, in the second communication mode, a second differential signal complying with the USB protocol or a differential signal complying with another communication protocol different from the USB protocol.

21. The method according to claim 19, wherein the first data pin pair is configured to transmit, in the first communication mode, a differential signal complying with a USB protocol; and
the first data pin pair is configured to transmit, in the second communication mode, single-ended signals of a same type or single-ended signals of different types.

22. A data transmission method, wherein the method is applied to a data transmission apparatus, the apparatus comprises a first connection unit, the first connection unit is a connector plug or a connector socket, the first connection unit comprises a first data pin, a second data pin, a third data pin, and a fourth data pin, the first data pin and the second data pin are centrosymmetrically disposed in the first connection unit, and the third data pin and the fourth data pin are centrosymmetrically disposed in the first connection unit; and the method comprises:
transmitting, by the first connection unit, a first signal by using the first data pin, and transmitting a second signal by using the second data pin, wherein the first signal and the second signal are signals in pairs; and
transmitting, by the first connection unit, a third signal by using the third data pin, and transmitting a fourth signal by using the fourth data pin, wherein the third signal and the fourth signal are signals in pairs; or
transmitting, by the first connection unit, the second signal by using the first data pin, and transmitting the first signal by using the second data pin; and
transmitting, by the first connection unit, the fourth signal by using the third data pin, and transmitting the third signal by using the fourth data pin.

23. The method according to claim 22, wherein the first signal and the second signal are first differential signals complying with a USB protocol; and
the third signal and the fourth signal are second differential signals complying with the USB protocol, or the third signal and the fourth signal are differential signals complying with another communication protocol different from the USB protocol.

24. A data transmission method, wherein the method is implemented by using a connection component, the connection component is connected between a first data transmission apparatus and a second data transmission apparatus, and the connection component comprises a second connection unit, a third connection unit, and a control unit, wherein the second connection unit is coupled to the first data transmission apparatus, the third connection unit is coupled to the second data transmission apparatus, the second connection unit is a connector plug or a connector socket, the third connection unit is a connector plug or a connector socket, and the second connection unit and the third connection unit are configured to transmit a first signal and a second signal in pairs, and a third signal and a fourth signal in pairs; and the method comprises:
if determining that the second connection unit is in a forward insertion state, performing, by the control unit, the following operations:
connecting a fifth data pin of the second connection unit to a ninth data pin of the third connection unit, to transmit the first signal between the first data transmission apparatus and the second data transmission apparatus by using the fifth data pin and the ninth data pin;
connecting a sixth data pin of the second connection unit to a tenth data pin of the third connection unit, to transmit the second signal between the first data transmission apparatus and the second data transmission apparatus by using the sixth data pin and the tenth data pin;
connecting a seventh data pin of the second connection unit to an eleventh data pin of the third connection unit, to transmit the third signal between the first data transmission apparatus and the second data transmission apparatus by using the seventh data pin and the eleventh data pin; and
connecting an eighth data pin of the second connection unit to a twelfth data pin of the third connection unit, to transmit the fourth signal between the first data transmission apparatus and the second data transmission apparatus by using the fifth data pin and the twelfth data pin; or
if determining that the second connection unit is in a reverse insertion state, performing the following operations:
connecting the fifth data pin to the tenth data pin, to transmit the second signal between the first data transmission apparatus and the second data transmission apparatus by using the fifth data pin and the tenth data pin;
connecting the sixth data pin to the ninth data pin, to transmit the first signal between the first data transmission apparatus and the second data transmission apparatus by using the sixth data pin and the ninth data pin;
connecting the seventh data pin to the twelfth data pin, to transmit the fourth signal between the first data transmission apparatus and the second data transmission apparatus by using the seventh data pin and the twelfth data pin; and
connecting the eighth data pin to the eleventh data pin, to transmit the third signal between the first data transmission apparatus and the second data transmission apparatus by using the eighth data pin and the eleventh data pin;
wherein the fifth data pin and the sixth data pin are centrosymmetrically disposed in the second connection unit, the seventh data pin and the eighth data pin are centrosymmetrically disposed in the second connection unit, the ninth data pin and the tenth pin are centrosymmetrically disposed in the third connection unit, and the eleventh data pin and the twelfth pin are centrosymmetrically disposed in the third connection unit.

25. The method according to claim 24, wherein the first signal and the second signal are first differential signals complying with a USB protocol; and
the third signal and the fourth signal are second differential signals complying with the USB protocol, or the third signal and the fourth signal are differential signals complying with another communication protocol different from the USB protocol.
